# EUROPEAN PATENT SPECIFICATION

(11) **EP 3 583 084 B1**
(45) Date of publication and mention of the grant of the patent: **16.03.2022**
(21) Application number: 18704992.9
(22) Date of filing: 19.02.2018
(51) Int. Cl.: C04B 38/10, C04B 28/02, C04B 28/04

(54) **SILANIZED INORGANIC PARTICLES FOR GENERATION OF STABLE INORGANIC FOAMS**
SILANISIERTE ANORGANISCHE PARTIKEL ZUR ERZEUGUNG VON STABILEN ANORGANISCHEN SCHAUMSTOFFEN
PARTICULES INORGANIQUES SILANISÉES POUR LA PRODUCTION DE MOUSSES INORGANIQUES STABLES

(30) Priority: 20.02.2017 EP 17156997
(43) Date of publication of application: 25.12.2019
(73) Proprietor: Construction Research & Technology GmbH, 83308 Trostberg (DE)
(72) Inventor: SCHLESINGER, Maik, 83308 Trostberg (DE); PETIT, Pauline, 83352 Altenmarkt/Alz (DE); FEICHTENSCHLAGER, Bernhard, 83278 Traunstein (DE); ALBRECHT, Gerhard, 83209 Prien am Chiemsee (DE)
(86) International application number: PCT/EP2018/054030
(87) International publication number: WO 2018/150025

(56) References cited:
- WO-A1-2016/118146
- US-A1- 2009 011 207
- US-A1- 2009 252 691
- PAUL D. I. FLETCHER ET AL: "Controlled Silanization of Silica Nanoparticles to Stabilize Foams, Climbing Films, and Liquid Marbles", LANGMUIR, vol. 27, no. 21, 1 November 2011 (2011-11-01), pages 12869-12876, XP055399685, US ISSN: 0743-7463, DOI: 10.1021/la2028725
- BERNARD P. BINKS ET AL: "Aqueous Foams Stabilized Solely by Silica Nanoparticles", ANGEWANDTE CHEMIE INTERNATIONAL EDITION, vol. 44, no. 24, 13 June 2005 (2005-06-13) , pages 3722-3725, XP055384690, ISSN: 1433-7851, DOI: 10.1002/anie.200462470

## Description

The present invention relates to the use of silanized inorganic particles to stabilize an inorganic foam, a process for preparing an inorganic foam comprising mixing silanized inorganic particles with at least one inorganic binder, an inorganic foam comprising silanized inorganic particles, and a composition comprising silanized inorganic particles for preparing an inorganic foam formulation, respectively.

Inorganic foams can be used as insulation material, e.g., as a thermal insulator, acoustic insulator or acoustic absorber as well as construction material with a low density. In contrast to foams based on organic polymers, this material is eco-friendly, robust, and non-flammable. The latter may also open up applications in the field of fire protection. Foams in general can be stabilized by use of surfactants or particles. Inorganic foams stabilized by surfactants typically have an open-cell foam structure. However, of particular interest are closed cell foams, as they have improved thermal insulation properties that goes along with improved mechanical stability.

It has been found that stable inorganic foams with a closed-cell foam structure can be obtained by using inorganic particles as foam stabilizers. However, the presence of amphiphilic molecules is required to initiate surface activity of the used particles. WO 2007/068127 A1 discloses the stabilization of wet foams by colloidal particles, e.g., in combination with propyl gallate. Juillerat et al. (F. K. Juillerat, U. T. Gonzenbach, P. Elser, A. R. Studart, L. J. Gauckler, J. Am. Ceram. Soc. 2011, 94, 77-83) disclose the stabilization of ceramic foams by colloidal Al₂O₃ particles that are partially hydrophobized by adsorption of propyl gallate molecules. US 9,540,287 B2 discloses the use of propyl gallate molecules in combination with cementitious particles to stabilize foamed cementitious slurries. According to DE 102014103258 A1, a gypsum inorganic foam can be stabilized by inorganic particles in combination with amphiphilic molecules, such as heptyl amine.

US 2009/011207 A1 discloses a method for providing a foamed cementitious slurry, in which a mixture comprising Portland cement and expanded perlite filler is formed, the perlite filler being coated with a member of the group consisting of silane, siloxane, silicone and mixtures thereof, and having a mean particle diameter between 20 and 150 µm.

However, this technology is sensitive to the binder composition, i.e. the foam formulation, that is used for the preparation of the inorganic foam. In particular, the used small amphiphilic molecules, which are needed to initiate surface activity of the used particles, can desorb from the particle surface. Therefore, the effectiveness of such amphiphilic molecules is strongly pH-dependent. As the pH-value of the foam formulation depends on the inorganic binder itself, impurities, and/or further additives as well as the amount of water in the foam formulation to be foamed, each foam formulation has to be carefully adjusted to the respective system and flammability of the final material may be increased, depending on the amount of organic solvents that have to be used.

Therefore, it was an object of the present invention to provide an improved foam stabilizer for inorganic foams. In particular, it was an object of the present invention to provide a robust foam stabilizer that can be used regardless of the pH-value of the foam formulation and other optional additives that are used for the preparation of the inorganic foam. In addition, it was an object of the present invention to provide a foam stabilizer, which is versatile and can be used for inorganic foams based on a variety of inorganic binders including, e.g., cements, gypsums, and geopolymers without having to adapt the foam formulation in terms of the pH-value or other additives. Furthermore, it was an object of the present invention to provide a foam stabilizer, which is suitable for stabilizing inorganic foams over a broad dosing amount. Additionally, it was an object of the present invention to provide a foam stabilizer, which provides a closed-cell foam structure.

It has surprisingly been found that the above objects can be achieved by the present invention, which is described hereinafter.

In one embodiment, the present invention relates to the use of silanized inorganic particles to stabilize an inorganic foam comprising at least one inorganic binder, wherein the silanized inorganic particles have a median particle size D₅₀ measured by dynamic light scattering in the range from 20 to 5000 nm and wherein the weight ratio of the silanized inorganic particles to the at least one inorganic binder is from 0.0003 : 1 to 0.5 : 1.

It has surprisingly been found that the use of silanized inorganic particles overcome the problem of the prior art systems applying inorganic particles in combination with amphiphilic molecules. In particular, the problem of desorption of the amphiphilic molecules can be substantially prevented, as the hydrophobic groups are covalently bonded to the surface of the inorganic particles according to the present invention. Therefore, the pH-values of the binder compositions, i.e. foam formulations, are not critical, and the silanized inorganic particles can be used for inorganic foams based on a variety of inorganic binders including, e.g., cements, gypsums, and geopolymers without having to adapt the foam formulation in terms of the pH-value or other additives.

Additionally, the foam stabilizer according to the present invention results in closed-cell inorganic foams with high compressive strength. Further, the silanized particles can be used to stabilize inorganic foams comprising various inorganic binders, such as cements, gypsums, or geopolymers.

In another embodiment, the present invention relates to a process for preparing an inorganic foam comprising the steps of
(1) mixing silanized inorganic particles, wherein the silanized inorganic particles have a median particle size D50 measured by dynamic light scattering in the range from 20 to 5000 nm,
   at least one inorganic binder, water, and optionally at least one additive and/or filler,
   wherein the weight ratio of water to dry inorganic binder is from 0.3 to 2.0, and
   wherein the silanized inorganic particles are provided an amount of from 0.1 to 30 wt.-%
   with regard to the amount of water; wherein the weight ratio of the silanized inorganic particles to the at least one inorganic binder is from 0.0003 : 1 to 0.5 : 1, and
(2) foaming the resulting foam formulation by mechanical, physical or chemical foaming.

In yet another embodiment, the present invention relates to an inorganic foam comprising
(i) silanized inorganic particles,
(ii) at least one inorganic binder, and
(iii) water.

In another embodiment, the present invention relates to a composition for preparing an inorganic foam formulation comprising as components
(i) silanized inorganic particles, wherein the silanized inorganic particles have a median particle size D50 measured by dynamic light scattering in the range from 20 to 5000 nm, and
(ii) at least one inorganic binder; wherein the weight ratio of the silanized inorganic particles to the at least one inorganic binder is from 0.0003 : 1 to 0.5 : 1 and wherein
   the components (i) and (ii) are present separately; or
   the components (i) and (ii) are present as a mixture.

The following definitions are relevant in connection with the embodiments of the present invention.

In the context of the present invention, it is distinguished between "inorganic foam formulation" and "inorganic foam". The inorganic foam formulation is used to prepare an inorganic foam by mechanical, physical or chemical foaming. The freshly prepared inorganic foam is to be distinguished from the hardened inorganic foam obtainable by hardening and optionally drying. Unless otherwise indicated, the term "inorganic foam" as used herein refers to the hardened inorganic foam.

Inorganic foams are three-phase systems, wherein one phase is gaseous, one phase is liquid, and one phase is solid. Thus, it is to be understood that the inorganic foam comprises a gas. The gaseous phase is present as fine gas bubbles separated by cell walls obtained from the liquid and solid phases. The cell walls meet each other at edges which meet each other at nodes, thereby forming a framework. The content of the gaseous phase, i.e. the air entrainment, in the inorganic foam may vary in a range of from 20 to 99 % or 20 to 98 % by volume, preferably from 50 to 98 % by volume. Preferably, the content of the gaseous phase is from 70 to 97 % by volume. The liquid phase is preferably an aqueous phase, so that the inorganic foam typically also comprises water. However, the water may be partly removed in a drying step. The solid phase of an inorganic foam comprises an inorganic binder. Solid inorganic foams, which are typically obtained after a drying step, can be open-cell foams or closed-cell foams. In closed-cell foams, the gas is completely surrounded by the cell wall. Typically, at the same density, closed-cell foams are more robust than open-cell foams. Accordingly, closed cell foams are preferred due to their improved mechanical stability. The density of the inorganic foam is preferably less than 350 g/L. More preferably, the inorganic foam has a density of from 50 to 300 g/L.

Water as denoted herein, can refer to pure, deionized H₂O, or water containing up to 0.1 wt.-% impurities and/or salts, such as normal tap water.

The gas phase present in the foam can be introduced by mechanical, physical or chemical foaming. Non-limiting examples of gases comprise air, nitrogen, noble gas, carbon dioxide, hydrocarbons and mixtures thereof.

The gas phase present in the foam can be introduced by mechanical foaming in the presence of the respective gas. Mechanical foaming may be performed by using a kitchen mixer, or by an oscillating process, or by a stator-rotor process.

The gas phase can also be introduced into the foam by physical or chemical foaming, wherein the physical or chemical foaming process is suitable to liberate a gas. Preferably, blowing agents are used, which decompose or react with water and/or an acid, so as to liberate the gas. Non-limiting examples of blowing agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates, carbonates and bicarbonates, such as CaCO₃, Na₂CO₃, and NaHCO₃, which are preferably used in combination with an acid, e.g., a mineral acid; metal powders, such as aluminum powder; azides, such as methyl azide; hydrazides, such as p-toluenesulfonylhydrazide; hydrazine.

The foaming by a blowing agent can be facilitated by the use of a catalyst. Suitable catalysts preferably comprise Mn²⁺, Mn⁴⁺, Mn⁷⁺ or Fe³⁺ cations. Alternatively, the enzyme catalase may be used as catalyst. Non-limiting examples of a suitable catalysts are MnO₂ and KMnO₄. Such catalysts are preferably used in combination with peroxide blowing agents.

Inorganic binders are inorganic compounds that harden in an aqueous environment (hydraulic) or in the presence of air (non-hydraulic). For example, Portland cement is a hydraulic inorganic binder, whereas gypsum is a non-hydraulic binder. A latent hydraulic binder refers to a binder that only becomes hydraulic when exposed to an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof.

Cement is an inorganic, finely milled hydraulic binder. The different types of cement are classified according to DIN EN 197-1 (11/2011) into the categories CEM I-V. These different cements vary from each other in their stability towards various corrosives and these cements therefore have different applications.

CEM I cement, also called Portland cement, contains about 70 wt.-% CaO and MgO, about 20 wt.-% SiO₂, about 10 wt.-% Al₂O₃ and Fe₂O₃. This cement is obtained by milling and baking limestone, chalk and clay. CEM II cement, is Portland cement with a low (about 6 to about 20 wt.-%) or moderate (about 20 to about 35 wt.-%) amount of additional components. This cement may further contain blast-furnace slag, fumed silica (10 wt.-% at most), natural pozzolans, natural calcined pozzolons, fly ash, burnt shale, or mixtures thereof. CEM III cement, also called blast-furnace cement, is comprised of Portland cement hat contains 36 to 85 wt.-% of slag. CEM IV cement, also called pozzolanic cement, contains next to Portland cement 11 to 65 % of mixtures of pozzolans, silica fume and fly ash. CEM V cement, also called composite cement, contains next to Portland cement 18 to 50 wt.-% of slag, or mixtures of natural pozzolans, calcined pozzolons, and fly ash. Additionally, the different types of cements may contain 5 wt.-% of additional inorganic, finely milled mineral compounds.

In addition, the term "cement" covers calcium aluminate cements, calcium sulfo aluminate cements, and mixtures thereof.

The term "calcium aluminate cements" refers to cements that predominantly comprise CaO x Al₂O₃. They can, e.g., be obtained by melting calcium oxide (CaO) or limestone (CaCO₃) and bauxite or aluminate together. Calcium aluminate cement comprises about 20 to 40% by weight of CaO, up to about 5% by weight of SiO₂, about 40 to 80% by weight of Al₂O₃ and up to about 20% by weight of Fe₂O₃. Calcium aluminate cements are defined according to DIN EN 14647 (01/2006).

The term "calcium sulfo aluminate cements" refers to cements that are predominantly composed of 4CaO x 3Al₂O₃ x CaSO₄), dicalciumsilicate (2CaO x SiO₂) and gypsum (CaSO₄ x 2H₂O).

The term inorganic binder also covers gypsum, i.e. calcium sulfate dihydrate (CaSO₄ x 2H₂O), calcium sulfate hemihydrate (CaSO₄ x ½ H₂O) and anhydrite (CaSO₄). Natural occurring gypsum is CaSO₄ x 2H₂O. However, burnt gypsum can be in a variety of hydration states according to the generic formula CaSO₄·x nH₂O, with 0 ≤ n < 2.

Geopolymers are binders that are primarily based on SiO₂ and/or Al₂O₃, such as poly(sialate), poly(siloxo), poly(sialate-siloxo), or poly(sialate-disiloxo), which harden in alkaline aqueous environment. Sialate is an abbreviation for silicon-oxo-aluminum. Geopolymers material is similar to zeolite, however, the microstructure is amorphous and not crystalline. These binders may also contain compounds based on Fe₂O₃, TiO₂, CaO, MgO, NaO, or K₂O. Pure geopolymers generally have a low calcium content. WO 2011/064005 A1 describes an inorganic binder system which comprises from 12 to 25 % by weight of CaO, and which permits production of construction chemical products that are resistant to chemical attack. Further non-limiting examples of geopolymers comprise microsilica, metakaolin or other aluminosilicates, fly ash, activated clay, pozzolans, ferro-sialate based geopolymers or mixtures thereof. Pozzolona are siliceous or siliceous and aluminous containing compounds. The alkaline environment used to activate the binders usually comprises aqueous solutions of alkali metal carbonates, alkali metal fluorides, alkali metal hydroxides, alkali metal aluminates and/or alkali metal silicates.

For the purposes of the present invention, a "latent hydraulic binder" is preferably a binder in which the molar ratio (CaO + MgO) : SiO₂ is from 0.8 to 2.5 and particularly from 1.0 to 2.0. In general terms, the above-mentioned latent hydraulic binders can be selected from industrial and/or synthetic slag, in particular from blast furnace slag, electrothermal phosphorous slag, steel slag and mixtures thereof, and the "pozzolanic binders" can generally be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, natural and synthetic zeolites and mixtures thereof.

As used herein, the term "slag" refers to the by-product of a smelting process, or synthetic slag. The main use of a smelting process is to convert an ore, scrap or a material mixture containing different metals into a form from which the desired metals can be skimmed as a metal layer and the undesired metal oxides, e.g. silicates, alumina, etc., remain as the slag.

Blast furnace slag (BFS) is formed as a by-product during the smelting of iron ore in the blast-furnace. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity. For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45 % by weight of CaO, about 4 to 17 % by weight of MgO, about 30 to 45% by weight of SiO₂ and about 5 to 15 % by weight of Al₂O₃, typically about 40% by weight of CaO, about 10 % by weight of MgO, about 35 % by weight of SiO₂ and about 12% by weight of Al₂O₃.

Amorphous silica is preferably an X-ray-amorphous silica, i.e. a silica for which the powder diffraction method reveals no crystallinity. The content of SiO₂ in the amorphous silica of the invention is advantageously at least 80% by weight, preferably at least 90% by weight. Precipitated silica is obtained on an industrial scale by way of precipitating processes starting from water glass. Precipitated silica from some production processes is also called silica gel.

Microsilica is a fine powder, mainly comprising amorphous SiO₂ powder and is a by-product of silicon or ferrosilicon production. The particles have a diameter of about 100 nm and a specific surface area of from about 15 to about 30 m²g⁻¹.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m² g⁻¹.

Metakaolin is produced when kaolin is dehydrated. Whereas at from 100 to 200°C kaolin releases physically bound water, at from 500 to 800 °C a dehydroxylation takes place, with collapse of the lattice structure and formation of metakaolin (Al₂Si₂O₇). Accordingly, pure metakaolin comprises about 54 % by weight of SiO₂ and about 46 % by weight of Al₂O₃.

Aluminosilicates are minerals comprising aluminum, silicon, and oxygen, which may be expressed by referring to the SiO₂ and Al₂O₃ content. They are a major component of kaolin and other clay minerals. Andalusite, kyanite, and sillimanite are naturally occurring aluminosilicate minerals that have the composition Al₂SiO₅.[

Fly ash is produced inter alia during the combustion of coal in power stations, and comprises fine particles of varying composition. The main ingredients of fly ash are silicon oxide, aluminum oxide, and calcium oxide. Class C fly ash (brown-coal fly ash) comprises according to WO 08/012438 about 10 wt.-% CaO, whereas class F fly ash (hard-coal fly ash) comprises less than 8 % by weight, preferably less than 4 % by weight, and typically about 2 % by weight of CaO.

Burnt shale, especially burnt oil shale is obtained at temperatures of about 800 °C by burning of natural shale and subsequent milling.

An overview of suitable raw materials for geopolymers is found by way of example in Caijun Shi, Pavel V. Krivenko, Della Roy, Alkali Activated Cements and Concretes, Taylor & Francis, London & New York, 2006, pp. 6-63.

As mentioned above, an alkaline activator is required, so that the latent hydraulic binder becomes hydraulic. It is preferably to select an alkaline activator from alkali metal hydroxides of the formula MOH and alkali metal silicates of the formula m SiO₂ x n M₂O, where M is the alkali metal, preferably Li, Na or K or a mixture thereof, and the molar ratio m:n is ≤ 4.0, preferably ≤ 3.0, with further preference ≤ 2.0, in particular ≤ 1.70, and with very particular preference ≤ 1.20.

The alkali metal silicate is preferably water glass, particularly preferably an aqueous water glass and in particular a sodium water glass or potassium water glass. However, it is also possible to use lithium water glass or ammonium water glass or a mixture of the water glasses mentioned. The m:n ratio stated above (also termed "modulus") should preferably not be exceeded, since otherwise reaction of the components is likely to be incomplete. It is also possible to use very much smaller moduli, for example about 0.2. Water glasses with higher moduli should be adjusted before use to moduli in the range of the invention by using a suitable aqueous alkali metal hydroxide.

The term "water glass" refers to alkali metal silicates, which are water soluble. Water glass can be obtained by the reaction of alkali metal carbonates with quartz sand (silicon dioxide). However, they can also be produced from mixtures of reactive silicas with the appropriate aqueous alkali metal hydroxides. Non-limiting examples of water glass comprise Na₂SiO₃, K₂SiO₃, and Li₂SiO₃. In addition to the anhydrous form, various hydrates of water glass exist as well. Typical trace impurities are based on the elements Al, Ca, Cr, Cu, Fe, Mg, and Ti. The ratio of alkali metal to silicate can vary. This ratio is defined in terms of the molar ratio of m SiO₂ to n M₂O as mentioned above. Typical values for the ratio m : n are values smaller than 4, smaller than 3, smaller than 2, or smaller than 1.7.

Potassium water glasses in the advantageous modulus range are mainly marketed as aqueous solutions because they are very hygroscopic; sodium water glasses in the advantageous modulus range are also obtainable commercially as solids. The solids contents of the aqueous water glass solutions are generally from 20% by weight to 60% by weight, preferably from 30 to 50% by weight.

The preferred quantity of the alkaline activator to be combined with the latent hydraulic binder is from 1 to 55% by weight and in particular from 20 to 50% by weight based on the foam formulation, where these data relate to solids contents.

Furthermore, the following additives are relevant for the present invention.

Rheology modifiers adjust the viscosity and thus the flow behavior and ensure a good balance between consistency, durability and application properties. These modifiers can be based on synthetic polymers (e.g. acrylic polymers), cellulose, silica, starches or clays.

Superplasticizer are polymers that function as dispersant to avoid particle segregation and improve the rheology and thus workability of suspensions. Superplasticizers generally can be divided into four categories: lignosulfonates, melamine sulfonates, naphthalene sulfonates, and comb polymers (e.g. polycarboxylate ethers, polyaromatic ethers, cationic copolymers, and mixtures thereof). Preferred superplasticizers are naphthalene sulfonates or polycarboxylate ethers.

The cement setting time can be prolonged / shortened by the addition of certain compounds called retarders / accelerators. Retarders can be divided into the groups of lignosulfonates, cellulose derivatives, hydroxyl carboxylic acids, organophosphates, synthetic retarders, and inorganic compounds. Non-limiting examples of retarders are hydroxyethyl cellulose, carboxymethyl hydroxyethyl cellulose, citric acid, tartaric acid, gluconic acid, glucoheptonate, maleic anhydride, 2-Acrylamido-2-methylpropanesulfonic acid (AMPS) copolymers, borax, boric acid, and ZnO. Non-limiting examples of accelerators are CaCl₂, KCI, Na₂SiO₃, NaOH, Ca(OH)₂, and CaO x Al₂O₃, lithium silicate, potassium silicate, and aluminum salts, such as aluminum sulfate.

Fibers (or stabilizing fibers) can be added during the foaming process to further increase the stability of the foam. Such fiber can be made of a variety of materials, such as rock (e.g. basalt), glass, carbon, organic polymers (e.g. polyethylene, polypropylene, polyacrylonitrile, polyamides, and polyvinyl alcohols), cellulose, lignocellulose, metals (e.g. iron or steel), and mixtures thereof. Organic fibers are preferred. The proportion present of the fibers can preferably be up to 3% by weight. The fibers preferably have a length of up to 200 mm or up to 120 mm, and a diameter of up to 100 µm.

The term "fibers" as used herein also includes nanocellulose. Nanocellulose is a product that can be obtained from any cellulose sources such as trees and other plants, algae, bacteria, tunicates. The nanocelluloses may differ from each other depending on the cellulose material used and the extraction method. The term "nanocellulose" as used herein includes all cellulose nanomaterials that have at least one dimension in the nanoscale. Cellulose nanomaterials and their preparation are described, for example, in Chem. Soc. Rev., 2011, 40, 3941-3994; Chem. Rev. 2010, 110, 3479-3500 and WO 2014/183082 which are incorporated herein in their entirety. Nanocellulose is to be distinguished over celluloses due to its crystallinity and the dimensions. Cellulose fibers do not have a dimension in the nanoscale. Their length is generally >500 µm.Nanocellulose is formed of particles having the dimensions given below.

Preferably, the nanocellulose as used herein has a length in the range from about 25 to about 4000 nm, preferably about 50 to about 1000 nm and in particular about 70 to about 500 nm and a width in the range from about 2 to about 70 nm, preferably about 3 to about 60 nm and in particular about 3 to about 50 nm. In an embodiment, the nanocellulose has a crystallinity in the range of about 40 to about 90 %, preferably about 50 to about 90 %. Suitable nanocelluloses are:

Cellulose nanocrystals (CNC) (sometimes also called nanowhiskers) are rod-like particles having in general a length of about 50 nm to about 500 nm, preferably about 80 nm to about 300 nm and a width of about 3 nm to about 50 nm, preferably about 4 to about 40 nm and in case they have a square or rectangular cross-section a height of about 2 to about 30 nm. Their crystallinity is about 50 to about 90 %, preferably about 60 to about 90 %. CNCs can be obtained from cellulose by treatment with an acid such as sulfuric acid. They are commercially available, for example, from the University of Maine, The Process Development Center, 5737 Jenness Hall, Orono, ME 04469 or from the Cellulose Research Institute, SUNY-ESF, 307 Stadium Place, Syracuse, N.Y.

Cellulose nanofibrils (nanofibrillated cellulose) which are cellulose fibrils having a length of about 500 nm to about 2000 nm and a width of about 4 nm to about 20 nm. They can be prepared as disclosed in Chem. Soc. Rev., 2011, 40, 3941-3994 and are commercially available e.g. from The Process Development Center of The University of Maine or elsewhere.

Tunicate cellulose nanocrystals which are particles produced by acid hydrolysis of tunicates, see Chem. Soc. Rev., 2011, 40, 3941-3994. They have a ribbon-like shape with a height of about 8 nm, a length of about 100 nm to about 4000 nm and a width of about 20 to about 30 nm.

The nanocellulose is, in general, contained in the foam formulation of the invention in an amount of 0.1 to 5 wt.-%, preferably 0.5 to 3 wt.-%.

Surfactants may also be present as additive. Surfactants include non-ionic surfactants, anionic surfactants, cationic surfactants, zwitterionic surfactants and proteins or synthetic polymers.

Non-ionic surfactants include fatty alcohols, cetyl alcohol, stearyl alcohol, and cetostearyl alcohol (comprising predominantly cetyl and stearyl alcohols), and oleyl alcohol. Further examples include polyethylene glycol alkyl ethers (Brij) CH₃-(CH₂)₁₀-₁₆-(O-C₂H₄)₁₋₂₅-OH such as octaethylene glycol monododecyl ether or pentaethylene glycol monododecyl ether; polypropylene glycol alkyl ethers CH₃-(CH₂)₁₀₋₁₆-(O-C₃H₆)₁₋₂₅-OH; glucoside alkyl ethers CH₃-(CH₂)₁₀₋₁₆-(O-Glucoside)₁₋₃-OH such as decyl glucoside, lauryl glucoside, octyl glucoside; polyethylene glycol octylphenyl ethers C₈H₁₇-(C₆H₄)-(O-C₂H₄)₁₋₂₅-OH such as Triton X-100; polyethylene glycol alkylphenyl ethers C₉H₁₉-(C₆H₄)-(O-C₂H₄)₁₋₂₅-OH such as nonoxynol-9; glycerol alkyl esters such as glyceryl laurate; polyoxyethylene glycol sorbitan alkyl esters such as polysorbate; sorbitan alkyl esters such as spans; cocamide MEA, cocamide DEA; dodecyldimethylamine oxide; block copolymers of polyethylene glycol and polypropylene glycol such as poloxamers; polyethoxylated tallow amine (POEA). Preferred non-ionic surfactants also include alkyl polyglucosides. Alkyl polyglucosides generally have the formula H-(C₆H₁₀O₅)ₘ-O-R¹, where (C₆H₁₀O₅) is a glucose unit and R¹ is a C₆-C₂₂-alkyl group, preferably a C₈-C₁₆-alkyl group and in particular a C₈-C₁₂-alkyl group, and m = from 1 to 5.

Anionic surfactants contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate, alkyl-aryl ether phosphates, alkyl ether phosphates. Preferred carboxylates include the alkyl carboxylates, such as sodium stearate. More specialized species include sodium lauroyl sarcosinate and carboxylate-based fluorosurfactants such as perfluorononanoate, perfluorooctanoate (PFOA or PFO).

Cationic surfactants include, dependent on the pH, primary, secondary, or tertiary amines: Primary and secondary amines become positively charged at pH < 10. An example is octenidine dihydrochloride. Furthermore, cationic surfactants include permanently charged quaternary ammonium salts, such as cetrimonium bromide (CTAB), cetylpyridinium chloride (CPC), benzalkonium chloride (BAC), benzethonium chloride (BZT), dimethyldioctadecylammonium chloride, dioctadecyldimethylammonium bromide (DODAB).

Zwitterionic (amphoteric) surfactants have both cationic and anionic centers attached to the same molecule. The cationic part is based on primary, secondary, or tertiary amines or quaternary ammonium cations. The anionic part can be more variable and include sulfonates, as in the sultaines CHAPS (3-[(3-Cholamidopropyl)dimethylammonio]-1-propanesulfonate) and cocamidopropyl hydroxysultaine. Betaines such as cocamidopropyl betaine have a carboxylate with the ammonium. The most common biological zwitterionic surfactants have a phosphate anion with an amine or ammonium, such as the phospholipids phosphatidylserine, phosphatidylethanolamine, phosphatidylcholine, and sphingomyelins. Non-limiting examples of proteins are bovine serum albumin, egg ovalbumin, milk caseins or beta-lactoglobulin.

The proportion of the surfactant, based on the foam formulation of the invention, can vary over a broad range. Preferably, the surfactant is present in an amount of up to 2.5 % by weight, preferably up to 1.5 % by weight based on the total solids weight of the formulation.

The term "filler" refers primarily to materials that can be added to increase the volume without impairing the properties of the foam. The fillers mentioned can be selected from the group consisting of quartz sand or powdered quartz, calcium carbonate, rock flour, low-density fillers (for example vermiculite, perlite, diatomaceous earth, mica, talc powder, magnesium oxide, foamed glass, hollow spheres, foam sand, clay, polymer particles), pigments (e.g. titanium dioxide), high density fillers (e.g. barium sulphate), metal salts (e.g. zinc salts, calcium salts, etc.), and mixtures thereof. Grain sizes suitable here are in particular up to 500 µm. It is particularly preferable that the average grain size of the foamed glass is up to 300 µm.

The term "inorganic particle" preferably refers to particles of SiO₂, Al₂O₃, TiO₂, or ZrO₂, even more preferably to particles of SiO₂ or Al₂O₃.

It is to be understood that the term "silanized inorganic particle" refers to a compound/particle which comprises organosilyl groups covalently bonded to the surface. A covalent bond is a chemical bond that involves sharing of the electron pairs between the atoms. Covalent bonds are usually much stronger than non-covalent bonds. Therefore, the silanized inorganic particles have a good stability. The covalent bond is typically formed as follows. As the inorganic particles comprise hydroxyl groups at the surface, said hydroxyl groups may react with a suitable silanization agent comprising at least one leaving group, so that at least one covalent O-Si-bond is formed. Thus, the organosilyl groups are typically covalently bonded to the surface of the inorganic particle via at least one oxygen atom. In other words, the organosilyl group is typically connected to an oxygen atom at the surface of the inorganic particle. However, in certain situations, the organosilyl groups may alternatively or additionally be connected, i.e. covalently bonded, via an oxygen atom to another organosilyl group at the surface of the inorganic particle.

Unless otherwise indicated, the term "organosilyl group at the surface of the inorganic particle" covers the option of the organosilyl group being connected to at least one oxygen atom at the surface of the inorganic particle, and the option of the organosilyl group being connected to the surface of the inorganic particle via at least one further organosilyl group, wherein the connection to the further organosilyl group is via an oxygen atom, and combinations of these options.

Preferably, silanized inorganic particles are obtainable by reacting inorganic particles with a suitable silanization agent comprising 4 substituents, of which 1, 2, or 3 substituents are leaving groups X as defined further below, and the remaining substituents are organic substituents as defined further below.

Below, exemplary silanization patterns of the silanized inorganic particles according to the invention are depicted:

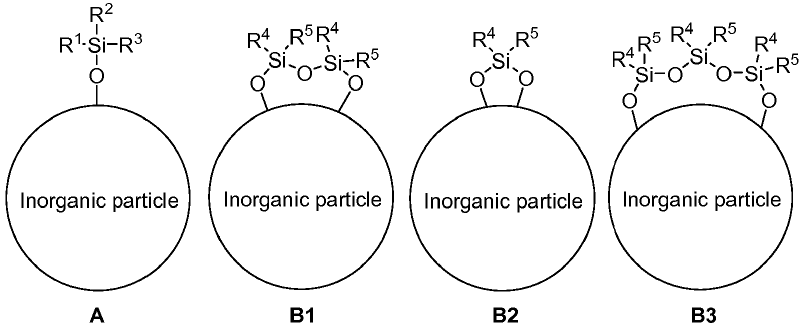

Pattern A represents a silanized inorganic particle that comprises an organosilyl group, which is only connected to an oxygen atom at the surface of the inorganic particle. This option will be obtained with a silanization agent comprising only one leaving group X and three organic substituents R¹, R², and R³.

Pattern B1 represents a silanized inorganic particle, wherein an organosilyl group, which is connected to an oxygen atom at the surface of the inorganic particle, is additionally connected via an oxygen atom to another organosilyl group, which is connected to the surface of the same inorganic particle via an oxygen atom. This option can be obtained with a silanization agent comprising two leaving groups and two organic substituents R⁴ and R⁵. Pattern B2 represents a silanized inorganic particle, wherein an organosilyl group is connected to two oxygen atoms at the surface of the inorganic particle. This option can also be obtained with a silanization agent comprising two leaving groups and two organic substituents R⁴ and R⁵. Pattern B3 represents a silanized inorganic particle, wherein a first organosilyl group, which is connected to an oxygen atom at the surface of the inorganic particle, is additionally connected via an oxygen atom to a second organosilyl group, and said second organosilyl group is connected to the surface of the same inorganic particle via a third organosilyl group, which itself is connected to the surface of the same inorganic particle via an oxygen atom.

Further patterns will be obtained with a silanization agent comprising three leaving groups and one organic substituent R⁶. In one possible pattern, one organosilyl group is connected to an oxygen atom at the surface of the inorganic particle, and is additionally connected via an oxygen atom to two further organosilyl groups at the surface of the same inorganic particle. In another possible pattern, one organosilyl group is connected to two oxygen atoms at the surface of the inorganic particle, and is additionally connected via an oxygen atom to one further organosilyl groups at the surface of the same inorganic particle. In yet another possible pattern, one organosilyl group is connected to three oxygen atoms at the surface of the inorganic particle.

Of course, also mixtures of the above patterns may be obtained, if combinations of silanization agents with different numbers of leaving groups are used. For example, Pattern C depicted below represents a silanized inorganic particle comprising an organosilyl group, which is connected to an oxygen atom at the surface of the inorganic particle, and another organosilyl group, which is connected to said organosilyl group at the surface of the inorganic particle via an oxygen atom.

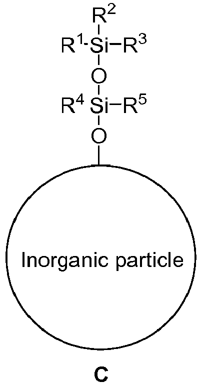

The term "silanization agent" refers to a reactive organosilyl compound that comprises 1, 2, or 3 same or different leaving groups X. The term "leaving group" is well known to the person skilled in the art and refers to a chemical group that can be easily replaced by a nucleophilic group-. The leaving group can be charged or uncharged. Common leaving groups in the context of silanization agents are halides, C₁-C₂-alkoxy, -OSi(CH₃)₃, and -NHSi(CH₃)₃, wherein -OSi(CH₃)₃ and -NHSi(CH₃)₃ typically further react, so that the leaving groups are water and ammonia. In addition, the organosilyl compound comprises at least one organic group, preferably at least one group selected from C₁-C₂₀-alkyl and phenyl. Examples of silanization agents include C₅-C₂₀-alkyltriethoxysilanes, C₅-C₂₀-alkyltrimethoxysilanes, C₅-C₂₀-dialkyldiethoxysilanes, C₅-C₂₀-dialkyldimethoxysilanes, C₅-C₂₀-alkyldiethylsilylchlorides, C₅-C₂₀-alkyldimethylsilylchlorides, tert-butyldiphenylsilylchloride, tert-butyldimethylsilylchloride, triisopropylsilylchloride, triethylsilylchloride, trimethylsilylchloride, dichlorodimethylsilane, hexamethyldisiloxane, or hexamethyldisilazane.

The term "C₁-C₂₀-alkyl" as used herein denotes in each case a straight-chain or branched alkyl group having from 1 to 20 carbon atoms. A skilled person understands that C₁- and C₂-alkyl groups cannot be branched. Examples of alkyl groups according to the invention are methyl, ethyl, n-propyl, iso-propyl, n-butyl, 2-butyl, iso-butyl, tert-butyl, n-pentyl, 1-methylbutyl, 2-methylbutyl, 3-methylbutyl, 2,2-dimethylpropyl, 1 ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, and 1-ethyl-2-methylpropyl, n-hexyl, n-heptyl, n-octyl, n-nonyl, n-decyl, n-octadecyl. Preferred C₁-C₂₀-alkyl groups are methyl, ethyl, n-propyl, isopropyl, n-butyl, isobutyl, sec-butyl, tert-butyl, n-hexyl, n-octyl, n-decyl, n-octadecyl. If it is referred to "C₅-C₂₀-alkyl"-groups, this denotes in each case a straight-chain or branched alkyl group having from 5 to 20 carbon atoms. Preferred C₅-C₂₀-alkyl groups are n-hexyl, n-octyl, n-decyl, n-octadecyl.

In certain embodiments of the invention, the terms "C₁-C₂₀-alkyl" and "C₅-C₂₀-alkyl" as defined above also cover alkyl groups, wherein one or more of the hydrogen atoms, preferably one or more hydrogen atoms at a terminal carbon atom, is/are replaced by at least one substituent selected from NH₂ and SH. However, it is preferred according to the invention that the C₁-C₂₀-alkyl and C₅-C₂₀-alkyl groups are unsubstituted, i.e. only comprise carbon and hydrogen atoms.

The term "particle size (Dₓ)" refers to the diameter of a particle distribution, wherein x % of the particles have a smaller diameter. The D₅₀ particle size is thus the median particle size. The Dₓ particle size can e.g. be measured by laser diffraction (static light scattering, SLS) or dynamic light scattering (DLS) methods. According to the present invention dynamic light scattering (DLS) according to ISO 22412:2008 is preferably used. Dynamic light scattering (DLS), sometimes referred to as Quasi-Elastic Light Scattering (QELS), is a non-invasive, well-established technique for measuring the size and size distribution of molecules and particles typically in the submicron region. In the present invention the particles were characterized, which have been dispersed in a liquid, preferably water or ethanol. The Brownian motion of particles or molecules in suspension causes laser light to be scattered at different intensities. Analysis of these intensity fluctuations yields the velocity of the Brownian motion and hence the particle size using the Stokes-Einstein relationship. The distribution can be a volume distribution (Dᵥ), a surface distribution (Dₛ), or a number distribution (Dₙ). In context of this application, the Dₓ value refers to a number distribution, wherein x(number) % of the particles have a smaller diameter. As used herein, the median particle size of the silanized inorganic particles essentially corresponds to the median particle size of the inorganic particles before silanization.

The contact angle of water at the surface of a silanized inorganic particle, defined as the angle at which a liquid-vapor interface meets a solid surface, can be used to determine the hydrophilic/hydrophobic balance of the silanized inorganic particle. The term hydrophobicity as used herein refers to the tendency of a material to avoid water and rather stay in oil (or air). Hydrophobic compounds usually do not have polar groups and do not form any (or many) favorable energetic interactions with water. Hydrophobic particles have a contact angle between the particle and water against air of > 90°. In contrast thereof, the term hydrophilic is used for particle that have a contact angle between the surface of the particle and water of < 90 ° against air. Such compounds are usually polar and can form favorable energetic interactions with water, such as hydrogen bonds. Methods to determine the contact angle are well known to the skilled artisan (reference is made to ,,Capillarity and Wetting Phenomena" of de Gennes, Brochart-Wyart and Quéré, ISBN 978-0-387-21656-0). For example, for the determination of the contact angel against water may be determined by optical drop shape analysis, e.g. by applying the static sessile drop method using a contact angle measuring device (goniometer) with the respective software. Hereby, a pellet of the respective particles is pressed or the particles are applied on top of an adhesive tape of an appropriate thickness. After flattening the surface, a droplet of a liquid, preferably water is added and the deposited drop lies on the surface of the solid. The contact area between the droplet and the solid is characteristic for the hydrophilic/hydrophobic properties of the particles.

The term "compressive strength" is, during a solicitation in a deformation of size reduction, the capacity of a material to withstand loads, or the strength at which there is rupture of the material. The compressive strength is measured according to the norm DIN EN 826 (07/2012) and denotes the maximum stress at a material rupture if the strain is lower than 10 %, or the stress resulting in a 10 % size reduction. Therefore, the compressive strength or the compressive strength per density of a material can be used as an indicator for the stability of a material.

The term "about" in respect to a measurable unit refers to normal deviations of said measurable unit. Such deviations depend on the precision of the measuring apparatus or they depend on statistical deviations that are expected by the skilled person. It is to be understood that the term "about" means a deviation of ± 15 %, preferably ± 10 %, more preferably ± 5 %.

The term "wt.-%" refers to the ratio of the mass of the respective component in relation to the sum of the mass of all components in percent, if not stated otherwise. The term vol.-% refers to the ratio of the volume of the respective component in relation to the sum of the volume of all components in percent.

The meaning of the term "comprising" is to be interpreted as encompassing all the specifically mentioned features as well optional, additional, unspecified ones, whereas the term "consisting of" only includes those features as specified. It is moreover intended that in each actual case the sum of all of the percentages of the specified and unspecified constituents of the formulation of the invention is always 100 %.

Preferred embodiments according to the invention are defined hereinafter. The preferred embodiments are preferred alone or in combination. Further, it is to be understood that the following preferred embodiments refer to all aspects of the present invention, i.e. the use, the process, the inorganic foam, and/or the composition, if not specified otherwise.

As mentioned above, the present invention relates in one embodiment to the use of silanized inorganic particles to stabilize an inorganic foam comprising at least one inorganic binder.

In a preferred embodiment according to the present invention, the silanized inorganic particles comprise organosilyl groups at the surface, wherein said organosilyl groups are selected from the group consisting of organosilyl groups of formula (I): 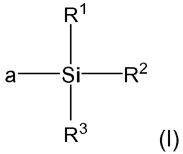 wherein
- R¹, R² and R³: are each independently selected from C₁-C₂₀-alkyl and phenyl; and
- a: marks the connection to an oxygen atom at the surface of the inorganic particle or the connection to another organosilyl group at the surface of the inorganic particle via an oxygen atom;
organosilyl groups of formula (II): 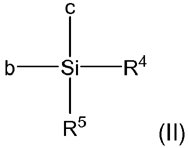 wherein
- R⁴ and R⁵: are each independently selected from the group consisting of C₁-C₂₀-alkyl and phenyl; and
- b and c: each independently mark the connection to an oxygen atom at the surface of the inorganic particle or the connection to another organosilyl group at the surface of the inorganic particle via an oxygen atom;
and
organosilyl groups of formula (III): 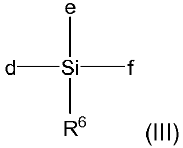 wherein
- R⁶ d, e and f: is selected from the group consisting of C₁-C₂₀-alkyl and phenyl; and each independently mark the connection to an oxygen atom at the surface of the inorganic particle or the connection to another organosilyl group at the surface of the inorganic particle via an oxygen atom.

In a more preferred embodiment, the silanized inorganic particles comprise organosilyl groups at the surface, wherein said organosilyl groups are selected from organosilyl groups of formula (I) wherein
- R¹, R² and R³ a: are each independently selected from C₁-C₂₀-alkyl and phenyl; and marks the connection to an oxygen atom at the surface of the inorganic particle.

In an even more preferred embodiment, the silanized inorganic particles comprise organosilyl groups at the surface, wherein said organosilyl groups are of formula (I), wherein R¹, R² and R³ are each independently selected from C₁-C₂₀-alkyl; and "a" marks the connection to an oxygen atom at the surface of the inorganic particle. In a particularly preferred embodiment, the silanized inorganic particles comprise organosilyl groups at the surface, wherein said organosilyl groups are of formula (I), wherein R¹, R² and R³ are each methyl and "a" marks the connection to an oxygen atom at the surface of the inorganic particle.

In another more preferred embodiment, the silanized inorganic particles comprise organosilyl groups at the surface, wherein said organosilyl groups are organosilyl groups of formula (II), wherein
- R⁴ and R⁵: are each independently selected from C₁-C₂₀-alkyl and phenyl; and
- b and c: each independently mark the connection to an oxygen atom at the surface of the inorganic particle or the connection to another organosilyl group at the surface of the inorganic particle via an oxygen atom.

In an even more preferred embodiment, the silanized inorganic particles comprise organosilyl groups at the surface, wherein said organosilyl groups are of formula (II), wherein R⁴ and R⁵ are selected from C₁-C₂₀-alkyl and phenyl, and are preferably methyl, and "b" and "c" each independently mark the connection to an oxygen atom at the surface of the inorganic particle or the connection to another organosilyl group at the surface of the inorganic particle via an oxygen atom.

In yet another more preferred embodiment, the silanized inorganic particles comprise organosilyl groups at the surface, wherein said organosilyl groups are organosilyl groups of formula (III), wherein
- R⁶ d, e, and f: is selected from C₁-C₂₀-alkyl and phenyl; and each independently mark the connection to an oxygen atom at the surface of the inorganic particle or the connection to another organosilyl group at the surface of the inorganic particle via an oxygen atom.

In an even more preferred embodiment, the silanized inorganic particles comprise organosilyl groups at the surface, wherein said organosilyl groups are organosilyl groups of formula (III), wherein R⁶ is selected from C₅-C₂₀-alkyl, preferably from hexyl, octyl, decyl, and octadecyl, and "d", "e", and "f" each independently mark the connection to an oxygen atom at the surface of the inorganic particle or the connection to another organosilyl group at the surface of the inorganic particle via an oxygen atom.

In a preferred embodiment according to the present invention, the silanized inorganic particles are obtainable by reacting inorganic particles with a suitable silanization agent, wherein said silanization agent is selected from the group consisting of X¹SiR¹R²R³, X²X³SiR⁴R⁵, X⁴X5X⁶SiR⁶, and mixtures thereof, wherein R¹, R², R³, R⁴, R⁵, and R⁶ are as defined above, and wherein X¹, X², X³, X⁴, X⁵, and X⁶ are independently selected from suitable leaving groups, preferably from halides, C₁-C₂-alkoxy, -OSi(CH₃)₃, and -NHSi(CH₃)₃, wherein -OSi(CH₃)₃ and -NHSi(CH₃)₃ typically further react, so that the leaving groups are water and ammonia.

In another preferred embodiment according to the present invention, the silanized inorganic particles are obtainable by reacting inorganic particles with a suitable silanization agent, wherein said silanization agent is selected from the group consisting of C₅-C₂₀-alkyltriethoxysilanes, C₅-C₂₀-alkyltrimethoxysilanes, C₅-C₂₀-dialkyldiethoxysilanes, C₅-C₂₀-dialkyldimethoxysilanes, C₅-C₂₀-alkyldiethylsilylchlorides, C₅-C₂₀-alkyldimethylsilylchlorides, tert-butyldiphenylsilylchloride, tert-butyldimethylsilylchloride, triisopropylsilylchloride, triethylsilylchloride, trimethylsilylchloride, dichlorodimethylsilane, hexamethyldisiloxane, and hexamethyldisilazane.

In a more preferred embodiment, the silanized inorganic particles are obtainable by reacting inorganic particles with a suitable silanization agent, wherein said silanization agent is selected from the group consisting of n-hexyltrimethoxysilane, n-hexyltriethoxysilane, n-octyltriethoxysilane, n-octyltrimethoxysilane, n-decyltriethoxysilane, n-decyltrimethoxysilane, n-octadecyltriethoxysilane, n-octadecyltrimethoxysilane, dimethyl-n-octylsilylchloride, tert-butyldiphenylsilylchloride, tert-butyldimethylsilylchloride, triisopropylsilylchloride, triethylsilylchloride, trimethylsilylchloride, dichlorodimethylsilane, hexamethyldisiloxane, and hexamethyldisilazane.

In one preferred embodiment according to the present invention, the silanized inorganic particles are obtainable by reacting inorganic particles with n-hexyltrimethoxysilane. In one preferred embodiment according to the present invention, the silanized inorganic particles are obtainable by reacting inorganic particles with n-hexyltriethoxysilane. In one preferred embodiment according to the present invention, the silanized inorganic particles are obtainable by reacting inorganic particles with n-octyltrimethoxysilane. In one preferred embodiment according to the present invention, the silanized inorganic particles are obtainable by reacting inorganic particles with n-octyltriethoxysilane. In one preferred embodiment according to the present invention, the silanized inorganic particles are obtainable by reacting inorganic particles with n-decyltrimethoxysilane. In one preferred embodiment according to the present invention, the silanized inorganic particles are obtainable by reacting inorganic particles with n-decyltriethoxysilane. In one preferred embodiment according to the present invention, the silanized inorganic particles are obtainable by reacting inorganic particles with n-octadecyltrimethoxysilane. In one preferred embodiment according to the present invention, the silanized inorganic particles are obtainable by reacting inorganic particles with n-octadecyltriethoxysilane. In one preferred embodiment according to the present invention, the silanized inorganic particles are obtainable by reacting inorganic particles with dimethyl-n-octylsilylchloride.

In a preferred embodiment according to the present invention, the silanized inorganic particles are selected from the group consisting of silanized SiO₂ particles, silanized Al₂O₃ particles, silanized TiO₂ particles and silanized ZrO₂ particles. In a more preferred embodiment according to the present invention, the silanized inorganic particles are silanized SiO₂ particles or silanized Al₂O₃ particles.

In a preferred embodiment according to the present invention, the silanized inorganic particles are obtainable by reacting inorganic particles with a suitable silanization agent in an amount of from 1 to 20 mol-%, preferably 3 to 17 mol-%, based on the total molar amount of the inorganic particles. In a preferred embodiment, the silanized inorganic particles are obtainable by reacting inorganic particles with a suitable silanization agent in the presence of a base, wherein preferably the base is aqueous ammonia solution.

In the present invention, the silanized inorganic particles have a median particle size D₅₀ measured by dynamic light scattering in the range of from 20 to 5000 nm, more preferably from 50 to 2500 nm. In another preferred embodiment, the inorganic particles have a median particle size D₅₀ measured by dynamic light scattering in the range of from 50 to 1000 nm. As used herein, the median particle size D₅₀ measured by dynamic light scattering of the silanized inorganic particles essentially corresponds to the median particle size D₅₀ measured by dynamic light scattering of the inorganic particles before silanization. It is to be understood that the term "essentially corresponds" means a deviation of at most ± 10 %, preferably maximum ± 5 %, more preferably ± 1 %. Preferably, the median particle size D₅₀ of the silanized inorganic particles is considered to be identical to the median particle size D₅₀ of the silanized inorganic particles before silanization.

In a preferred embodiment according to the present invention, the silanized inorganic particles have a contact angle measured by the static sessile drop method using a goniometer of from 30 to 140°, preferably from 50 to 110°.

It is to be understood that different types of silanized inorganic particles may be used according to the invention. Thus, when it is referred to silanized inorganic particles herein, this includes also one or more groups of silanized inorganic particles having different particle sizes, or one or more groups of silanized inorganic particles based on different inorganic particles (e.g. SiO₂ particles and Al₂O₃ particles), or one or more groups of silanized inorganic particles obtained with different types of silanization agents, or combinations of the aforementioned groups of silanized inorganic particles.

Furthermore, in addition to the silanized inorganic particles, also other particles including latex particles, polymer particles, or inorganic particles with other hydrophobic modifications may be used.

In a preferred embodiment, the at least one inorganic binder is
(a) selected from cements, preferably from CEM I, CEM II, CEM III, CEM IV, CEM V cements, according to DIN EN 197-1 (11/2011), calcium aluminate cements, calcium sulfo aluminate cements, and mixtures thereof; or
(b) selected from gypsum, calcium sulfate hemihydrate, anhydrite, and mixtures thereof;
(c) selected from latent hydraulic binders, pozzolanic binders, and mixtures thereof, wherein the latent hydraulic binders, pozzolanic binders, and mixtures thereof are provided in combination with an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof; or
(d) a mixture of inorganic binders selected from options (a) and (b), or a mixture of inorganic binders selected from options (a) and (c), or a mixture of inorganic binders selected from options (b) and (c), or a mixture of inorganic binders selected from options (a), (b), and (c).

In one preferred embodiment according to the present invention, the inorganic binder is selected from the group consisting of CEM I, CEM II, CEM III, CEM IV, CEM V cements according to DIN EN 197-1 (11/2011), calcium aluminate cements, calcium sulfo aluminate cements, and mixtures thereof.

In a preferred embodiment, the inorganic binder is selected from the group consisting of CEM I, CEM II, CEM III, CEM IV, CEM V cements according to DIN EN 197-1 (11/2011), and mixtures thereof.

In another preferred embodiment according to the present invention, the inorganic binder is a sulfate resisting (SR) and/or low heat (LH) cement according to DIN EN 197-1 (11/2011). In a more preferred embodiment, the inorganic binder is low hardening (L), normal hardening (N) or rapid hardening (R) CEM I, CEM II, CEM III, CEM IV, or CEM V cement according to DIN EN 197-1 (11/2011). In one particularly preferred embodiment, the inorganic binder is a CEM I 52.5 R cement according to DIN EN 197-1 (11/2011). In one particularly preferred embodiment, the inorganic binder is a CEM III 52.5 N LH cement according to DIN EN 197-1 (11/2011).

In another preferred embodiment according to the invention, the inorganic binder is a calcium aluminate cement, a calcium sulfo aluminate cement, or a mixture thereof. In one particularly preferred embodiment, the inorganic binder is a calcium aluminate cement. In another particularly preferred embodiment, the inorganic binder is a calcium sulfo aluminate cement.

In one preferred embodiment according to the present invention, the inorganic binder is selected from selected from gypsum, calcium sulfate hemihydrate, anhydrite, and mixtures thereof. In a more preferred embodiment, the inorganic binder is gypsum (CaSO₄ x 2 H₂O).

In one preferred embodiment according to the invention, the inorganic binder is selected from latent hydraulic binders, pozzolanic binders, and mixtures thereof, provided in combination with an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof. In a more preferred embodiment, the inorganic binder is a latent hydraulic binder, provided in combination with an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof. In another more preferred embodiment, the inorganic binder is a pozzolanic binder provided in combination with an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof.

Preferred latent hydraulic binders and pozzolanic binders include blast furnace slag, microsilica, metakaolin, alumosilicates, fly ash, and mixtures thereof. Thus, in a more preferred embodiment, the at least one inorganic binder is selected from blast furnace slag, microsilica, metakaolin, alumosilicates, fly ash, and mixtures thereof.

Preferred alkaline activators include alkali metal hydroxides, alkali metal carbonates, alkali metal aluminates, alkali metal silicates, and mixtures thereof. Thus, in another more preferred embodiment, the alkaline activator is selected from the group consisting of alkali metal hydroxides, alkali metal carbonates, alkali metal aluminates, alkali metal silicates, and mixtures thereof.

In a particularly preferred embodiment, the at least one inorganic binder is selected from blast furnace slag, microsilica, metakaolin, alumosilicates, fly ash, and mixtures thereof, and is provided in combination with an alkaline activator, which is preferably selected from the group consisting of alkali metal hydroxides, alkali metal carbonates, alkali metal aluminates, alkali metal silicates, and mixtures thereof.

In another preferred embodiment, the at least one inorganic binder is a mixture of inorganic binders selected from options (a) and (b) above, or a mixture of inorganic binders selected from options (a) and (c) above, or a mixture of inorganic binders selected from options (b) and (c) above, or a mixture of inorganic binders selected from options (a), (b), and (c) above. It is particularly preferred that the at least one inorganic binder is a mixture of a cement (option (a)) and a geopolymers (option (c)). For example, mixtures of geopolymers and CEM I may be used. Thus, in one particularly preferred embodiment, the at least one inorganic binder is a mixture of (a) a cement selected from CEM I, CEM II, CEM III, CEM IV, CEM V cements according to DIN EN 197-1 (11/2011), and mixtures thereof, and (b) a geopolymers selected from blast furnace slag, microsilica, metakaolin, alumosilicates, fly ash, and mixtures thereof, provided in combination with an alkaline activator, which is preferably selected from the group consisting of alkali metal hydroxides, alkali metal carbonates, alkali metal aluminates, alkali metal silicates, and mixtures thereof. By combining the geopolymers with a cement, the overall CaO content can be increased to an amount of at least 20 wt.-% of CaO, thereby improving the chemical stability.

In a preferred embodiment, the inorganic foam, which is stabilized according to the invention, has a gaseous phase content of from 70 to 97 % by volume.

In a further preferred embodiment, the inorganic foam has a density of less than 350 g/L, preferably in the range of from 50 to 300 g/L.

Suitable amounts of the silanized inorganic particles to stabilize an inorganic foam comprising at least one inorganic binder, as well as preferred amounts of the inorganic binder, are defined further below in connection with the process according to the invention.

The present invention further relates in one embodiment to a process for preparing an inorganic foam comprising the steps of
(1) mixing silanized inorganic particles, at least one inorganic binder, water, and optionally at least one additive and/or filler,
   wherein the weight ratio of water to dry inorganic binder is from 0.3 to 2.0, and
   wherein the silanized inorganic particles are provided an amount of from 0.1 to 30 wt.-%
   with regard to the amount of water; and
(2) foaming the resulting foam formulation by chemical, physical, or mechanical foaming.

In a preferred embodiment, the weight ratio of water to dry inorganic binder in step (1) of the process for preparing an inorganic foam is from 0.4 to 1.2.

In another preferred embodiment, the silanized inorganic particles are provided in step (1) of the process for preparing an inorganic foam in an amount of from 1 to 25 wt.-% with regard to the amount of water, more preferably in an amount of from 6 to 20 wt.-%. It is to be understood that, if a surfactant is used as an additive, the amount of the silanized inorganic particles may be further reduced, so that the amount can even be lower than 0.1 wt.-% with regard to the amount of water. However, it is an advantage of the invention that no surfactant is mandatorily required. Accordingly, it is preferred that no surfactant is used, and the amount of the silanized inorganic particles is at least 0.1 wt.-% with regard to the amount of water, preferably at least 1 wt.-%.

In a particularly preferred embodiment, the weight ratio of water to dry inorganic binder in step (1) for the process for preparing an inorganic foam is from 0.6 to 1.2 and the silanized inorganic particles are provided in an amount of from 6 to 20 wt.-% with regard to the amount of water.

The weight ratio of the silanized inorganic particles to the at least one inorganic binder is from 0.0003 : 1 to 0.5 :1, from 0.003 :1 to 0.5 : 1, or from 0.03 :1 to 0.5 : 1, preferably from 0.03 : 1 to 0.5 : 1.

As indicated above, it is to be understood that different types of silanized inorganic particles may be used according to the invention. Thus, when it is referred to silanized inorganic particles herein, this includes also one or more groups of silanized inorganic particles having different particle sizes, or one or more groups of silanized inorganic particles based on different inorganic particles (e.g. SiO₂ particles and Al₂O₃ particles), or one or more groups of silanized inorganic particles obtained with different types of silanization agents, or combinations of the aforementioned groups of silanized inorganic particles. When the amount of the silanized inorganic particles is specified, the amount thus refers to the total amount of all silanized inorganic particles. Furthermore, in addition to the silanized inorganic particles, also other particles including latex particles, polymer particles, or inorganic particles with other hydrophobic modifications may be used.

It can be advantageous to disperse the silanized inorganic particles in water prior to the addition of the binder. This results in an even distribution of the silanized inorganic particles.

In a preferred embodiment, step (1) of the process therefore comprises the steps of
(1a) dispersing the silanized inorganic particles in water to obtain an aqueous dispersion comprising from 0.1 to 30 wt.-% of silanized particles; and
(1b) mixing the aqueous dispersion with the at least one inorganic binder, so that the weight ratio of water to dry inorganic binder is from 0.3 to 2.0.

In a preferred embodiment, the silanized inorganic particles are provided in step (1a) of the process for preparing an inorganic foam in an amount of from 1 to 25 wt.-% with regard to the amount of water, more preferably in an amount of from 6 to 20 wt.-%, and/or the weight ratio of water to dry inorganic binder in step (1b) of the process for preparing an inorganic foam is preferably from 0.4 to 1.2, and -%.

In another preferred embodiment, step (1) further comprises mixing the silanized inorganic particles, the at least one inorganic binder, and the water with at least one additive and/or filler, wherein the additive and/or the filler may be added in step (1a) or (1b), or in an additional step (1c).

In a preferred embodiment, the at least one additive is selected from the group consisting of accelerators, retardants, rheology modifiers, superplasticizers, and fibers. In a more preferred embodiment, the at least one additive is selected from the group consisting of accelerators, retardants, rheology modifiers, superplasticizers, and fibers, wherein the at least one additive is provided in weight ratio of from 0.0003 to 30 wt.-%, or of from 0.03 to 25 wt.-% based on the amount of the at least one inorganic binder.

In a particularly preferred embodiment, fibers are used as additive. Preferably, fibers are used in an amount of 0.0003 to 30 wt.-%, from 0.03 to 10 wt.-%, or from 0.3 to 3 wt.-% based on the amount of the at least one inorganic binder.

In a preferred embodiment, a filler is used. The amount of the filler may vary over a broad range. In particular, the filler may be present in similar amounts as the inorganic binder. Preferably, the weight ratio of filler to inorganic binder may be from 2:1 to 1:100, preferably from 1:1 to 1:10.

In a preferred embodiment, step (2) of the process for preparing an inorganic foam comprises foaming the resulting foam formulation with a blowing agent, preferably by mixing the foam formulation obtained in step (1) with carbonates or bicarbonates, such as CaCO₃, Na₂CO₃, and NaHCO₃, aluminium powder, *p*-toluenesulfonylhydrazide, hydrogen peroxide, dibenzylperoxide, perchloric acid, peroxomonosulfuric acid, dicumyl peroxide, cumyl hydroperoxide or mixtures thereof, more preferably hydrogen peroxide. In a more preferred embodiment, foaming of the foam formulation in step (2) is performed with a blowing agent, preferably by mixing the foam formulation obtained in step (1) with aluminum powder or with a carbonate in the presence of an acid or with an aqueous solution of hydrogen peroxide, optionally in the presence of a catalyst.

In a more preferred embodiment, step (2) of the process for preparing an inorganic foam comprises foaming the resulting foam formulation with a blowing agent, preferably a blowing agent as defined above, wherein the blowing agent is added in an amount of from 0.1 to 4 wt.-%, from 0.5 to 4 wt.-%, or from 1 to 2 wt.-%, preferably in an amount of from 1 to 2 wt.-% based on the total amount of the foam formulation.

It is possible to accelerate the foaming process, in particular foaming with a peroxide as blowing agent, by the addition of a suitable catalyst. In a preferred embodiment, step (2) of the process for preparing an inorganic foam therefore comprises foaming the resulting foam formulation with a chemical blowing agent in the presence of a catalyst, wherein preferably the catalyst comprises Mn²⁺, Mn⁴⁺, Mn⁷⁺ or Fe³⁺ cations, or the catalyst is the enzyme catalase. More preferably, the catalyst is selected from the group consisting of MnSO₄, MnO₂, KMnO₄, and mixtures thereof.

In a preferred embodiment, the chemical blowing agent is hydrogen peroxide provided as an aqueous hydrogen peroxide solution comprising from 20 to 40 wt.-%, preferably about 30 wt.-% hydrogen peroxide, wherein the aqueous hydrogen peroxide solution is added in an amount of from 2 to 5 wt.-% based on the total weight of the foam formulation.

In another preferred embodiment, mechanical foaming is performed, preferably by using a kitchen mixer, or by an oscillating process, or by a stator-rotor process.

In a preferred embodiment, the inorganic foam, which is prepared by the process according to the invention, has a gaseous phase content of from 70 to 97 % by volume.

In a further preferred embodiment, the inorganic foam has a density of less than 350 g/L, preferably in the range of from 50 to 300 g/L.

In a preferred embodiment, the freshly prepared inorganic foam is allowed to harden in a sealed container after step 2). In a more preferred embodiment, the freshly prepared inorganic foam is allowed to harden for at least 12 h in a sealed container after step 2). Hardening can be performed at a temperature in the range of from 0 °C to 100 °C, preferably 20 °C to 80 °C.

Preferred embodiments regarding the silanized inorganic particles and the inorganic binders are defined above in connection with the use according to the invention. These preferred embodiments also refer to the above defined process of the invention.

The above mentioned process results in an inorganic foam. As explained above, the inorganic foam comprises a gaseous, a liquid and a solid phase. As the liquid phase comprises water, and water may partly be removed upon drying of the inorganic foam, the relative amount of the liquid phase of the inorganic foam may vary over time. However, the ratio of the silanized inorganic particles to the inorganic binder typically does not vary in the solid phase. It has been shown by the present invention that the obtained inorganic foam is a closed-cell foam. Furthermore, the obtained inorganic foams have a high compressive strength as well as a high ratio of compressive strength / density of the inorganic foam.

Thus, in yet another embodiment, the present invention relates to an inorganic foam comprising
(i) silanized inorganic particles, and
(ii) at least one inorganic binder.

The weight ratio of the silanized inorganic particles and the at least one inorganic binder in dry form is from 0.003:1 to 0.5:1.

In another preferred embodiment, the inorganic foam is obtainable by the process according to the present invention as defined above.

In another preferred embodiment, the inorganic foam is a closed-cell foam.

In a preferred embodiment, the inorganic foam has a gaseous phase content of from 70 to 97 % by volume.

In a further preferred embodiment, the inorganic foam has a density of less than 350 g/L, preferably in the range of from 50 to 300 g/L.

In a preferred embodiment, the inorganic foam has a compressive strength of at least 10 kPa, at least 50 kPa, or at least 100 kPa, preferably at least 100 kPa. In another preferred embodiment, the inorganic foam has a ratio of compressive strength to dry density of from 0.5 kPa·L/g to 10 kPa·L/g, preferably from 1 kPa·L/g to 5 kPa·L/g.

Preferred embodiments regarding the silanized inorganic particles and the inorganic binders are defined above in connection with the use according to the invention. These preferred embodiments also refer to the above defined inorganic foam of the invention.

The inorganic foam can be prepared starting from a composition comprising silanized inorganic particles and at least one inorganic binder. Preferably, the composition is provided in dry form, and the inorganic foam formulation may be obtained by adding water. Thus, the present invention relates in another embodiment to a composition for preparing an inorganic foam formulation comprising as components
(i) silanized inorganic particles, wherein the silanized inorganic particles have a median particle size D50 measured by dynamic light scattering in the range from 20 to 5000 nm, and
(ii) at least one inorganic binder

wherein the weight ratio of the silanized inorganic particles to the at least one inorganic binder is from 0.0003 : 1 to 0.5 : 1 and
wherein
   the components (i) and (ii) are present separately; or
   the components (i) and (ii) are present as a mixture.

Preferred embodiments regarding the silanized inorganic particles and the inorganic binders are defined above in connection with the use according to the invention. These preferred embodiments also refer to the above defined composition of the invention.

The present invention is further illustrated by the following examples.

### Examples

Particle distributions were measured by dynamic light scattering as explained above using a Zetasizer Nano ZS (Malvern). Contact angles were measured as explained above using a PocketGoniometer PG-X (FIBRO Systems AB Sweden).

The compressive strength was determined according to DIN EN 826. As initial condition is applied a force of 2N on the sample, which is then deformed at a velocity 3 mm/min. The compressive strength is defined as the stress maximum for a deformation lower or equal to 10% of deformation.

Combinations of scanning electron microscopy (SEM), energy-dispersive X-ray spectroscopy (EDX), optical imaging, determination of dry density, compressive strength measurements, dry density by weighting were used to characterize the final foams. In particular, the electron microscope Phenom ProX (LOT Quantum-Design) was used.

Preparation Example 1: Preparation of inorganic particles by sol-gel method A mixture of ethanol (460 g), deionized water (75.6 g) and aqueous ammonia solution (32 g, 32 %) is heated to 40 °C. After the addition of tetraethylorthosilicate (96 mL) the mixture is stirred for 1 hr. The particles are finally dried at 50 °C after separation from the mixture. The particles had a median particle size D₅₀ of about 400 nm.

### Preparation Example 2: Preparation of silanized inorganic particles

### Example 2a:

Commercial alumina particles (25.5 g, D₅₀: about 350 nm) were dispersed in ethanol (800 g) using an Ultra-Turrax homogenizer. An aqueous ammonia solution (90 mL, 32 %) is added under stirring and the mixture is heated to 40 °C. After addition of n-decyltriethoxysilane (6 mL) and 1 hr of stirring, the particles were separated, washed several times with ethanol and finally dried at 50 °C. The determined contact angle of a flattened surface solely based those particles was 75.6°

### Example 2b:

Silica particles (8.5 g, obtained in step 1) were dispersed in hexane (100 mL) using an Ultra-Turrax homogenizer. An aqueous ammonia solution (30 mL, 32 %) is added under stirring and the mixture is heated to 50 °C. After addition of n-octyltriethoxysilane (2 mL) and 4 hrs of stirring, the particles were separated, washed several times with ethanol and finally dried at 50 °C. The determined contact angle of a flattened surface solely based those particles was 90.4°.

### Example 2c:

Commercial alumina particles (8.5 g, D₅₀: about 350 nm) were dispersed in ethanol (250 g) using an Ultra-Turrax homogenizer. An aqueous ammonia solution (30 mL, 32 %) is added under stirring and the mixture is heated to 40 °C. After addition of n-decyltrimethoxysilane (1.68 mL) and 1 hr of stirring, the particles were separated, washed several times with ethanol and finally dried at 50 °C.

### Example 2d:

Commercial alumina particles (8.5 g, D₅₀: about 350 nm) were dispersed in hexane (100 mL) using an Ultra-Turrax homogenizer and the mixture is heated to 50 °C. After addition of Chlorodimethyl-n-octylsilan (1.5 mL) and 4 hrs of stirring, the particles were separated, washed several times with ethanol and finally dried at 50 °C.

### Example 2e:

Commercial silica particles (20 g, D₅₀: about 11 µm) were dispersed in hexane (500 mL) using an Ultra-Turrax homogenizer and the mixture is heated to 50 °C. After addition of n-octyltriethoxysilane (14 mL) and 4 hrs of stirring, the particles were separated, washed several times with ethanol and finally dried at 50 °C.

### Example 2f:

Commercial silica particles (8.5 g, D₅₀: about 10 µm) were dispersed in hexane (100 mL) using an Ultra-Turrax homogenizer and the mixture is heated to 50 °C. After addition of n-octyltriethoxysilane (0.08 mL) and 4 hrs of stirring, the particles were separated, washed several times with ethanol and finally dried at 50 °C.

### Example 3: Cement foams

### Example 3a:

The functionalized particles of Example 2a were first dispersed in water at a concentration of 12 wt % using ultrasound. Cement Mergelstetten CEM I 52.5 R containing 0.45 wt% of PAN fibers was then added to the dispersion at a water to cement ratio W/C=1. The slurry was mixed few minutes with an overhead stirrer in order to form a homogeneous slurry. Hydrogen peroxide (30 wt%) was finally added at a concentration of 3.4 wt% with regard to the slurry, and mixed for a short time. The slurry created was directly casted inside a form of 60x60x40 mm and expanded within about 3 min of a factor 4. The foam was then covered by a plastic film during 1 day to prevent water evaporation, and then demolded. The bubbles had a diameter of about 2 mm. After drying, the density was 164 g/L and the compressive strength 0.11 MPa.

### Example 3b:

A similar process was used with a different particle chemistry (particles of Example 2b). The expanding factor was similar but the pore size was smaller, about 0.5-1 mm. After drying, the density was 184 g/L and the compressive strength 0.14 MPa.

### Example 3c:

A similar process was used with different particle chemistry (particles of Example 2c). The expanding factor was about 2 and the pore size was about 0.5 mm.

### Example 3d:

A similar process was used as in Example 3a. Particles of Example 2a were used. Before addition of hydrogen peroxide, 1.6 wt% of potassium permanganate solution (5 wt%) is mixed with the cement slurry. The expanding factor is about 4 and the pore size are about 3-4 mm. After drying, the density is 144 g/L and the compressive strength 0.06 MPa.

### Example 3e:

The functionalized particles of Example 2a were first dispersed in water as in the previous examples. Naphthalene sulfonate (40 wt%) was mixed at a concentration of 0.8 wt%. Then, cement Mergelstetten CEM I 52.5 R containing 0.45 wt% of PAN fibers and 33 wt% of limestone filler was added to the dispersion at a water to cement ratio W/C=0.8. The slurry was mixed, foamed and casted following the same process as described in Example 3a. The foam expands of a factor 3, and the bubble diameter was about 1-2 mm. After drying, the density was 211 g/L and the compressive strength 0.62 MPa.

### Example 3f:

A similar process was used as in Example 3d. Particles of Example 2e were used combined with a cement Milke Premium CEM I 52,5R. The pore size obtained is smaller than 1 mm. After drying, the density is 164 g/L and the compressive strength 0.05 MPa.

### Example 3g

A similar process was used as in Example 3d. Particles of Example 2f were used combined with a cement Milke Premium CEM I 52,5R. The pore size obtained is about 1-1.5 mm. After drying, the density is 175 g/L and the compressive strength 0.2 MPa.

### Example 3h

The functionalized particles of Example 2e were dispersed at a concentration of 6wt% in water. Cement Milke Premium CEM I 52,5 R containing 0.3% of PVA fibers was then added to the dispersion at a W/C=1. The slurry was mixed few minutes with an overhead stirrer in order to form a homogeneous slurry. 0.7 wt% of potassium permanganate solution (5 wt%) is mixed with the cement slurry. Hydrogen peroxide (30 wt%) was finally added at a concentration of 7.5 wt% with regard to the slurry, and mixed for a short time. The slurry created was directly casted inside a form of 60x60x40 mm and expanded. The foam was then covered by a plastic film during 1 day to prevent water evaporation, and then demolded. The bubbles had a diameter of about 1-1.5 mm. After drying, the density was 85 g/L and the compressive strength 0.03 MPa.

### Example 4: Geopolymer foams

In the case of geopolymers foams, a suspension of functionalized particles (commercial alumina particles functionalized with n-octyltriethoxysilane) was prepared with a solid content of 20 wt% through dispersion with ultrasound. This dispersion was then mixed with waterglass, metakaolin and fly ash. When the slurry had formed, potassium permanganate and hydrogen peroxide were successively added and homogenized into the slurry, before casting it into the molds. The slurry expanded in 3-4 minutes of a factor about 3.

Characterization of the foams according to Examples 3 and 4:
SEM pictures of the foams obtained in Examples 3c and 3d showed fully disconnected bubbles with a smooth interface. Furthermore, the concentration of silicon (resp. aluminum) was measured through EDX to be much higher at the bubble surface than in the lamellae between the 2 interfaces, if the foam was stabilized by silica (resp. alumina) particles. Both measurements confirmed that the foam produced had closed pores and was stabilized by functionalized particles.

After 28 days, the samples were cut at a size 50x50x30 mm. The dry density was obtained through weighing and size measurement. Samples 3a and 3b show a compressive strength of 0.11 and 0.14 MPa respectively, for dry densities lower than 200 g L⁻¹. For similar or higher densities (≥ 200 g L⁻¹), cement foams stabilized with surfactant were prepared, and an open-cell structure was produced. The obtained compressive strength of such foams varied between 0.06 and 0.09 MPa. Therefore, the clear advantage of the invention was shown.

## Claims

1. Use of silanized inorganic particles to stabilize an inorganic foam comprising at least one inorganic binder, wherein the silanized inorganic particles have a median particle size D₅₀ measured by dynamic light scattering in the range from 20 to 5000 nm and wherein the weight ratio of the silanized inorganic particles to the at least one inorganic binder is from 0.0003 : 1 to 0.5 :1.

2. A process for preparing an inorganic foam comprising the steps of
(1) mixing silanized inorganic particles, wherein the silanized inorganic particles have a median particle size D₅₀ measured by dynamic light scattering in the range from 20 to 5000 nm, at least one inorganic binder, water, and optionally at least one additive and/or filler,
wherein the weight ratio of water to dry inorganic binder is from 0.3 to 2.0, and
wherein the silanized inorganic particles are provided an amount of from 0.1 to 30 wt.-% with regard to the amount of water;
wherein the weight ratio of the silanized inorganic particles to the at least one inorganic binder is from 0.0003 : 1 to 0.5 :1
and
(2) foaming the resulting foam formulation by mechanical, physical or chemical foaming.

3. The process according to claim 2, wherein step (1) comprises the steps of
(1a) dispersing the silanized inorganic particles in water to obtain an aqueous dispersion comprising from 0.1 to 30 wt.-% of silanized particles; and
(1b) mixing the aqueous dispersion with the at least one inorganic binder, so that the weight ratio of water to dry inorganic binder is from 0.3 to 2.0.

4. The process according to claim 2 or 3, wherein the at least one additive is selected from the group consisting of accelerators, retarders, rheology modifiers, superplasticizers, and fibers.

5. The process according to any one of claims 2 to 4, wherein foaming of the foam formulation in step (2) is performed with a blowing agent, preferably by mixing the foam formulation obtained in step (1) with aluminum powder or with a carbonate in the presence of an acid or with an aqueous solution of hydrogen peroxide, optionally in the presence of a catalyst.

6. An inorganic foam comprising
(i) silanized inorganic particles, wherein the silanized inorganic particles have a median particle size D₅₀ measured by dynamic light scattering in the range from 20 to 5000 nm,
(ii) at least one inorganic binder, and
(iii) water,
wherein the weight ratio of the silanized inorganic particles to the at least one inorganic binder is from 0.0003 : 1 to 0.5 :1.

7. The inorganic foam according to claim 6, wherein the weight ratio of the silanized inorganic particles and the at least one inorganic binder in dry form is from 0.003:1 to 0.5:1.

8. The inorganic foam according to claim 6 or 7, wherein the inorganic foam is obtainable by the process of any one of claims 2 to 5.

9. The inorganic foam according to any one of claims 6 to 8, wherein the inorganic foam is a closed-cell foam.

10. A composition for preparing an inorganic foam formulation comprising as components
(i) silanized inorganic particles, wherein the silanized inorganic particles have a median particle size D₅₀ measured by dynamic light scattering in the range from 20 to 5000 nm, and
(ii) at least one inorganic binder;
wherein the weight ratio of the silanized inorganic particles to the at least one inorganic binder is from 0.0003 : 1 to 0.5 :1 and
wherein
the components (i) and (ii) are present separately; or
the components (i) and (ii) are present as a mixture.

11. The use according to claim 1, the process according to any one of claims 2 to 5, the inorganic foam according to any one of claims 6 to 9, or the composition according to claim 10, wherein the silanized inorganic particles comprise organosilyl groups at the surface, wherein said organosilyl groups are selected from the group consisting of
organosilyl groups of formula (I): 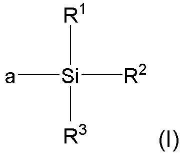 wherein
R¹, R² and R³ a are each independently selected from C₁-C₂₀-alkyl and phenyl; and marks the connection to an oxygen atom at the surface of the inorganic particle or the connection to another organosilyl group at the surface of the inorganic particle via an oxygen atom;
organosilyl groups of formula (II): 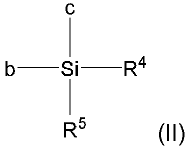 wherein
R⁴ and R⁵ are each independently selected from the group consisting of C₁-C₂₀-aikyi and phenyl; and
b and c each independently mark the connection to an oxygen atom at the surface of the inorganic particle or the connection to another organosilyl group at the surface of the inorganic particle via an oxygen atom;
and organosilyl groups of formula (III): 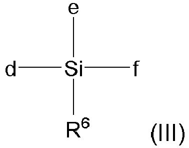 wherein
R⁶ is selected from the group consisting of C₁-C₂₀-aikyi and phenyl; and
d, e and f each independently mark the connection to an oxygen atom at the surface of the inorganic particle or the connection to another organosilyl group at the surface of the inorganic particle via an oxygen atom.

12. The use according to any one of claims 1 or 11, the process according to any one of claims 2 to 5 or 11, the inorganic foam according to any one of claims 6 to 9 or 11, or the composition according to any one of claims 10 or 11, wherein the silanized inorganic particles are obtainable by reacting inorganic particles with a suitable silanization agent, wherein said silanization agent is selected from the group consisting of C₅-C₂₀-alkyltriethoxysilanes, C₅-C₂₀-alkyltrimethoxysilanes, C₅-C₂₀-dialkyldiethoxysilanes, C₅-C₂₀-dialkyldimethoxysilanes, C₅-C₂₀-alkyldiethylsilylchlorides, C₅-C₂₀-alkyldimethylsilylchlorides, tert-butyldiphenylsilylchloride, tert-butyldimethylsilylchloride, triisopropylsilylchloride, triethylsilylchloride, trimethylsilylchloride, dichlorodimethylsilane, hexamethyldisiloxane, and hexamethyldisilazane.

13. The use according to any one of claims 1, 11 or 12, the process according to any one of claims 2 to 5, 11 or 12, or the inorganic foam according to any one of claims 6 to 9, 11 or 12, or the composition according to any one of claims 10, 11 or 12, wherein the silanized inorganic particles are silanized SiO₂ or Al₂O₃ particles.

14. The use according to any one of claims 1, 11, 12 or 13, the process according to any one of claims 2 to 5, 11, 12 or 13, the inorganic foam according to any one of claims 6 to 9, 11, 12 or 13, or the composition according to any one of claims 10, 11, 12 or 13, wherein the silanized inorganic particles are obtainable by reacting inorganic particles with a suitable silanization agent in an amount of from 1 to 20 mol-%, preferably 3 to 17 mol-%, based on the total molar amount of the inorganic particles.

15. The use according to any one of claims 1, 11, 12, 13 or 14, the process according to any one of claims 2 to 5, 11, 12, 13 or 14, the inorganic foam according to any one of claims 6 to 9, 11, 12, 13 or 14, the composition according to any one of claims 10, 11, 12, 13 or 14, wherein the at least one inorganic binder is
(a) selected from cements, preferably from CEM I, CEM II, CEM III, CEM IV, CEM V cements, according to DIN EN 197-1 (11/2011), calcium aluminate cements, calcium sulfo aluminate cements, and mixtures thereof; or
(b) selected from gypsum, calcium sulfate hemihydrate, anhydrite, and mixtures thereof;
(c) selected from latent hydraulic binders, pozzolanic binders, and mixtures thereof, wherein the latent hydraulic binders, pozzolanic binders, and mixtures thereof are provided in combination with an alkaline activator, which is preferably selected from the group consisting of alkali metal hydroxides, alkaline earth metal hydroxides, alkali metal carbonates, alkaline earth metal carbonates, alkali metal aluminates, alkaline earth metal aluminates, alkali metal silicates, alkaline earth metal silicates, and mixtures thereof; or
(d) a mixture of inorganic binders selected from options (a) and (b), or a mixture of inorganic binders selected from options (a) and (c), or a mixture of inorganic binders selected from options (b) and (c), or a mixture of inorganic binders selected from options (a), (b), and (c).

16. The use according to any one of claims 1, 11, 12, 13, 14 or 15, the process according to any one of claims 2 to 5, 11, 12, 13, 14 or 15, the inorganic foam according to any one of claims 6 to 9, 11, 12, 13, 14 or 15, the composition according to anyone of claims 10, 11, 12, 13, 14 or 15, wherein the inorganic foam has a gaseous phase content of from 70 to 97 %, and/or wherein the inorganic foam has a density of less than 350 g/L.

## Patentansprüche

1. Verwendung von silanisierten anorganischen Partikeln zum Stabilisieren eines anorganischen Schaumstoffs, der wenigstens ein anorganisches Bindemittel umfasst, wobei die silanisierten anorganischen Partikel eine mediane Partikelgröße D₅₀, gemessen durch dynamische Lichtstreuung, in dem Bereich von 20 bis 5000 nm aufweisen und wobei das Gewichtsverhältnis der silanisierten anorganischen Partikel zu dem wenigstens einen anorganische Bindemittel von 0,0003:1 bis 0,5:1 beträgt.

2. Verfahren zur Herstellung eines anorganischen Schaumstoffs, umfassend die Schritte
(1) Mischen von silanisierten anorganischen Partikeln, wobei die silanisierten anorganischen Partikel eine mediane Partikelgröße D₅₀, gemessen durch dynamische Lichtstreuung, in dem Bereich von 20 bis 5000 nm aufweisen, wenigstens einem anorganischen Bindemittel, Wasser und gegebenenfalls wenigstens einem Zusatzstoff und/oder Füllstoff,
wobei das Gewichtsverhältnis von Wasser zu trockenem anorganischem Bindemittel von 0,3 bis 2,0 beträgt und
wobei die silanisierten anorganischen Partikel in einer Menge von 0,1 bis 30 Gew.-%, bezogen auf die Menge von Wasser, bereitgestellt werden;
wobei das Gewichtsverhältnis der silanisierten anorganischen Partikel zu dem wenigstens einen anorganische Bindemittel von 0,0003:1 bis 0,5:1 beträgt,
und
(2) Verschäumen der erhaltenen Schaumstoffformulierung durch mechanisches, physikalisches oder chemisches Verschäumen.

3. Verfahren gemäß Anspruch 2, wobei Schritt (1) die Schritte umfasst:
(1a) Dispergieren der silanisierten anorganischen Partikel in Wasser, um eine wässrige Dispersion zu erhalten, die von 0,1 bis 30 Gew.-% an silanisierten Partikeln enthält; und
(1b) Mischen der wässrigen Dispersion mit dem wenigstens einen anorganischen Bindemittel, so dass das Gewichtsverhältnis von Wasser zu trockenem anorganischem Bindemittel von 0,3 bis 2,0 beträgt.

4. Verfahren gemäß Anspruch 2 oder 3, wobei der wenigstens eine Zusatzstoff ausgewählt ist aus der Gruppe bestehend aus Beschleunigern, Verzögerern, Rheologiemodifikatoren, Superplastifikatoren und Fasern.

5. Verfahren gemäß einem der Ansprüche 2 bis 4, wobei das Verschäumen der Schaumstoffformulierung bei Schritt (2) mit einem Blähmittel durchgeführt wird, vorzugsweise durch Mischen der bei Schritt (1) erhaltenen Schaumstoffformulierung mit Aluminiumpulver oder mit einem Carbonat in Gegenwart einer Säure oder mit einer wässrigen Lösung von Wasserstoffperoxid, gegebenenfalls in Gegenwart eines Katalysators.

6. Anorganischer Schaumstoff, umfassend
(i) silanisierte anorganische Partikel, wobei die silanisierten anorganischen Partikel eine mediane Partikelgröße D₅₀, gemessen durch dynamische Lichtstreuung, in dem Bereich von 20 bis 5000 nm aufweisen,
(ii) wenigstens ein anorganisches Bindemittel und
(iii) Wasser,
wobei das Gewichtsverhältnis der silanisierten anorganischen Partikel zu dem wenigstens einen anorganische Bindemittel von 0,0003:1 bis 0,5:1 beträgt.

7. Anorganischer Schaumstoff gemäß Anspruch 6, wobei das Gewichtsverhältnis der silanisierten anorganischen Partikel zu dem wenigstens einen anorganische Bindemittel in trockener Form von 0,003:1 bis 0,5:1 beträgt.

8. Anorganischer Schaumstoff gemäß Anspruch 6 oder 7, wobei der anorganische Schaumstoff durch das Verfahren gemäß einem der Ansprüche 2 bis 5 erhältlich ist.

9. Anorganischer Schaumstoff gemäß einem der Ansprüche 6 bis 8, wobei der anorganische Schaumstoff ein geschlossenzelliger Schaumstoff ist.

10. Zusammensetzung zur Herstellung einer anorganischen Schaumstoffformulierung, umfassend als Komponenten
(i) silanisierte anorganische Partikel, wobei die silanisierten anorganischen Partikel eine mediane Partikelgröße D₅₀, gemessen durch dynamische Lichtstreuung, in dem Bereich von 20 bis 5000 nm aufweisen, und
(ii) wenigstens ein anorganisches Bindemittel;
wobei das Gewichtsverhältnis der silanisierten anorganischen Partikel zu dem wenigstens einen anorganische Bindemittel von 0,0003:1 bis 0,5:1 beträgt, und
wobei
die Komponenten (i) und (ii) getrennt vorliegen; oder
die Komponenten (i) und (ii) als Gemisch vorliegen.

11. Verwendung gemäß Anspruch 1, Verfahren gemäß einem der Ansprüche 2 bis 5, anorganischer Schaumstoff gemäß einem der Ansprüche 6 bis 9 oder Zusammensetzung gemäß Anspruch 10, wobei die silanisierten anorganischen Partikel Organosilylgruppen an der Oberfläche umfassen, wobei die Organosilylgruppen ausgewählt sind aus der Gruppe bestehend aus
Organosilylgruppen der Formel (I): 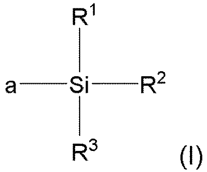 wobei
R¹, R² und R³ jeweils unabhängig ausgewählt sind aus C₁-C₂₀-Alkyl und Phenyl; und
a die Verknüpfung mit einem Sauerstoffatom an der Oberfläche des anorganischen Partikels oder die Verknüpfung mit einer anderen Organosilylgruppe an der Oberfläche des anorganischen Partikels über ein Sauerstoffatom bezeichnet;
Organosilylgruppen der Formel (II): 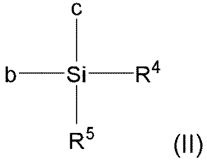 wobei
R⁴ und R⁵ jeweils unabhängig ausgewählt sind aus der Gruppe bestehend aus C₁-C₂₀-Alkyl und Phenyl; und
b und c jeweils unabhängig die Verknüpfung mit einem Sauerstoffatom an der Oberfläche des anorganischen Partikels oder die Verknüpfung mit einer anderen Organosilylgruppe an der Oberfläche des anorganischen Partikels über ein Sauerstoffatom bezeichnen;
und
Organosilylgruppen der Formel (III): 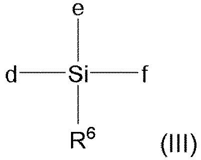 wobei
R⁶ ausgewählt ist aus der Gruppe bestehend aus C₁-C₂₀-Alkyl und Phenyl; und
d, e und f jeweils unabhängig die Verknüpfung mit einem Sauerstoffatom an der Oberfläche des anorganischen Partikels oder die Verknüpfung mit einer anderen Organosilylgruppe an der Oberfläche des anorganischen Partikels über ein Sauerstoffatom bezeichnen.

12. Verwendung gemäß einem der Ansprüche 1 oder 11, Verfahren gemäß einem der Ansprüche 2 bis 5 oder 11, anorganischer Schaumstoff gemäß einem der Ansprüche 6 bis 9 oder 11 oder Zusammensetzung gemäß einem der Ansprüche 10 oder 11, wobei die silanisierten anorganischen Partikel durch Umsetzen von anorganischen Partikeln mit einem geeigneten Silanisierungsmittel erhältlich sind, wobei das Silanisierungsmittel ausgewählt ist aus der Gruppe bestehend aus C₅-C₂₀-Alkyltriethoxysilanen, C₅-C₂₀-Alkyltiimethoxysilanen, C₅-C₂₀-Dialkyldiethoxysilanen, C₅-C₂₀-Dialkyldimethoxysilanen, C₅-C₂₀-Alkyldiethylsilylchloriden, C₅-C₂₀-Alkyldimethylsilylchloriden, tert-Butyldiphenylsilylchlorid, tert-Butyldimethylsilylchlorid, Triisopropylsilylchlorid, Triethylsilylchlorid, Trimethylsilylchlorid, Dichlordimethylsilan, Hexamethyldisiloxan und Hexamethyldisilazan.

13. Verwendung gemäß einem der Ansprüche 1, 11 oder 12, Verfahren gemäß einem der Ansprüche 2 bis 5, 11 oder 12, anorganischer Schaumstoff gemäß einem der Ansprüche 6 bis 9, 11 oder 12 oder Zusammensetzung gemäß einem der Ansprüche 10, 11 oder 12, wobei die silanisierten anorganischen Partikel silanisierte SiO₂- oder Al₂O₃-Partikel sind.

14. Verwendung gemäß einem der Ansprüche 1, 11, 12 oder 13, Verfahren gemäß einem der Ansprüche 2 bis 5, 11, 12 oder 13, anorganischer Schaumstoff gemäß einem der Ansprüche 6 bis 9, 11, 12 oder 13 oder Zusammensetzung gemäß einem der Ansprüche 10, 11, 12 oder 13, wobei die silanisierten anorganischen Partikel durch Umsetzen von anorganischen Partikeln mit einem geeigneten Silanisierungsmittel in einer Menge von 1 bis 20 mol-%, vorzugsweise 3 bis 17 mol-%, bezogen auf die Gesamtmolmenge der anorganischen Partikel, erhältlich sind.

15. Verwendung gemäß einem der Ansprüche 1, 11, 12, 13 oder 14, Verfahren gemäß einem der Ansprüche 2 bis 5, 11, 12, 13 oder 14, anorganischer Schaumstoff gemäß einem der Ansprüche 6 bis 9, 11, 12, 13 oder 14 oder Zusammensetzung gemäß einem der Ansprüche 10, 11, 12, 13 oder 14, wobei das wenigstens eine anorganische Bindemittel ist:
(a) ausgewählt aus Zementen, vorzugsweise aus CEM I-, CEM-II-, CEM-III-, CEM-IV-, CEM-V-Zementen gemäß DIN EN 197-1 (11/2011), Calciumaluminatzementen, Calciumsulfoaluminatzementen und Gemischen davon; oder
(b) ausgewählt aus Gips, Calciumsulfathemihydrat, Anhydrit und Gemischen davon;
(c) ausgewählt aus latenten hydraulischen Bindemitteln, puzzolanischen Bindemitteln und Gemischen davon, wobei die latenten hydraulischen Bindemittel, puzzolanischen Bindemittel und Gemische davon in Kombination mit einem alkalischen Aktivator bereitgestellt werden, der vorzugsweise ausgewählt ist aus der Gruppe bestehend aus Alkalimetallhydroxiden, Erdalkalimetallhydroxiden, Alkalimetallcarbonaten, Erdalkalimetallcarbonaten, Alkalimetallaluminaten, Erdalkalimetallaluminaten, Alkalimetallsilicaten, Erdalkalimetallsilicaten und Gemischen davon; oder
(d) ein Gemisch von anorganischen Bindemitteln ausgewählt aus Optionen (a) und (b) oder ein Gemisch von anorganischen Bindemitteln ausgewählt aus Optionen (a) und (c) oder ein Gemisch von anorganischen Bindemitteln ausgewählt aus Optionen (b) und (c) oder ein Gemisch von anorganischen Bindemitteln ausgewählt aus Optionen (a), (b) und (c).

16. Verwendung gemäß einem der Ansprüche 1, 11, 12, 13, 14 oder 15, Verfahren gemäß einem der Ansprüche 2 bis 5, 11, 12, 13, 14 oder 15, anorganischer Schaumstoff gemäß einem der Ansprüche 6 bis 9, 11, 12, 13, 14 oder 15 oder Zusammensetzung gemäß einem der Ansprüche 10, 11, 12, 13, 14 oder 15, wobei der anorganische Schaumstoff einen Gasphasengehalt von 70 bis 97 % aufweist und/oder wobei der anorganische Schaumstoff eine Dichte von weniger als 350 g/l aufweist.

## Revendications

1. Utilisation de particules inorganiques silanisées pour stabiliser une mousse inorganique comprenant au moins un liant inorganique, les particules inorganiques silanisées possédant une taille médiane de particule D₅₀ mesurée par diffusion de lumière dynamique dans la plage de 20 à 5 000 nm et le rapport en poids des particules inorganiques silanisées sur l'au moins un liant inorganique étant de 0,0003 : 1 à 0,5 : 1.

2. Procédé pour la préparation d'une mousse inorganique comprenant les étapes de
(1) mélange de particules inorganiques silanisées, les particules inorganiques silanisées possédant une taille médiane de particule D₅₀ mesurée par diffusion de lumière dynamique dans la plage de 20 à 5 000 nm, d'au moins un liant inorganique, d'eau, et éventuellement d'au moins un(e) additif et/ou charge, le rapport en poids d'eau sur liant inorganique sec étant de 0,3 à 2,0, et
les particules inorganiques silanisées étant fournies en une quantité allant de 0,1 à 30 % en poids, par rapport à la quantité d'eau ;
le rapport en poids des particules inorganiques silanisées sur l'au moins un liant inorganique étant de 0,0003 : 1 à 0,5 : 1
et
(2) moussage de la formulation de mousse résultante par moussage mécanique, physique ou chimique.

3. Procédé selon la revendication 2, l'étape (1) comprenant les étapes de
(1a) dispersion des particules inorganiques silanisées dans de l'eau pour obtenir une dispersion aqueuse comprenant de 0,1 à 30 % en poids de particules silanisées ; et
(1b) mélange de la dispersion aqueuse avec l'au moins un liant inorganique, de sorte que le rapport en poids d'eau sur liant inorganique sec soit de 0,3 à 2,0.

4. Procédé selon la revendication 2 ou 3, l'au moins un additif étant choisi dans le groupe constitué par des accélérateurs, des retardateurs, des modificateurs de rhéologie, des superplastifiants, et des fibres.

5. Procédé selon l'une quelconque des revendications 2 à 4, le moussage de la formulation de mousse dans l'étape (2) étant réalisé avec un agent de gonflement, préférablement en mélangeant la formulation de mousse obtenue dans l'étape (1) avec de la poudre d'aluminium ou avec un carbonate en la présence d'un acide ou avec une solution aqueuse de peroxyde d'hydrogène, éventuellement en la présence d'un catalyseur.

6. Mousse inorganique comprenant
(i) des particules inorganiques silanisées, les particules inorganiques silanisées possédant une taille médiane de particule D₅₀ mesurée par diffusion de lumière dynamique dans la plage de 20 à 5 000 nm,
(ii) au moins un liant inorganique, et
(iii) de l'eau,
le rapport en poids des particules inorganiques silanisées sur l'au moins un liant inorganique étant de 0,0003 : 1 à 0,5 : 1.

7. Mousse inorganique selon la revendication 6, le rapport en poids des particules inorganiques silanisées et de l'au moins un liant inorganique sous forme sèche étant de 0,003 : 1 à 0,5 : 1.

8. Mousse inorganique selon la revendication 6 ou 7, la mousse inorganique pouvant être obtenue par le procédé selon l'une quelconque des revendications 2 à 5.

9. Mousse inorganique selon l'une quelconque des revendications 6 à 8, la mousse inorganique étant une mousse à alvéoles fermées.

10. Composition pour la préparation d'une formulation de mousse inorganique comprenant en tant que composants
(i) des particules inorganiques silanisées, les particules inorganiques silanisées possédant une taille médiane de particule D₅₀ mesurée par diffusion de lumière dynamique dans la plage de 20 à 5 000 nm, et
(ii) au moins un liant inorganique ;
le rapport en poids des particules inorganiques silanisées sur de l'au moins un liant inorganique étant de 0,0003 : 1 à 0,5 : 1, et
les composants (i) et (ii) étant présents séparément ; ou
les composants (i) et (ii) étant présents en tant que mélange.

11. Utilisation selon la revendication 1, procédé selon l'une quelconque des revendications 2 à 5, mousse inorganique selon l'une quelconque des revendications 6 à 9, ou composition selon la revendication 10, les particules inorganiques silanisées comprenant des groupes organosilyle à la surface, lesdits groupes organosilyle étant choisis dans le groupe constitué par des groupes organosilyle de formule (I) : 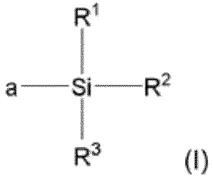
R¹, R² et R³ étant chacun indépendamment choisis parmi C₁₋₂₀-alkyle et phényle ; et
a marquant la connexion à un atome d'oxygène à la surface de la particule inorganique ou la connexion à un autre groupe organosilyle à la surface de la particule inorganique via un atome d'oxygène ;
des groupes organosilyle de formule (II) : 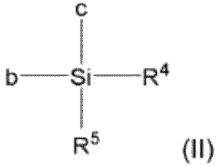
R⁴ et R⁵ étant chacun indépendamment choisis dans le groupe constitué par C₁₋₂₀-alkyle et phényle ; et
b et c chacun indépendamment marquant la connexion à un atome d'oxygène à la surface de la particule inorganique ou la connexion à un autre groupe organosilyle à la surface de la particule inorganique via un atome d'oxygène ;
et
des groupes organosilyle de formule (III) : 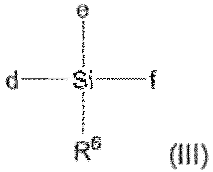
R⁶ étant choisi dans le groupe constitué par C₁₋₂₀-alkyle et phényle ; et
d, e et f chacun indépendamment marquant la connexion à un atome d'oxygène à la surface de la particule inorganique ou la connexion à un autre groupe organosilyle à la surface de la particule inorganique via un atome d'oxygène.

12. Utilisation selon l'une quelconque des revendications 1 et 11, procédé selon l'une quelconque des revendications 2 à 5 ou 11, mousse inorganique selon l'une quelconque des revendications 6 à 9 ou 11, ou composition selon l'une quelconque des revendications 10 et 11, les particules inorganiques silanisées pouvant être obtenues en mettant en réaction des particules inorganiques avec un agent de silanisation approprié, ledit agent de silanisation étant choisi dans le groupe constitué par des C₅-C₂₀-alkyltriéthoxysilanes, des C₅-C₂₀-alkyltriméthoxysilanes, des C₅-C₂₀-dialkyldiéthoxysilanes, des C₅-C₂₀-dialkyldiméthoxysilanes, des chlorures de C₅-C₂₀-alkyldiéthylsilyle, des chlorures de C₅-C₂₀-alkyldiméthylsilyle, le chlorure de tert-butyldiphénylsilyle, le chlorure de tert-butyldiméthylsilyle, le chlorure de triisopropylsilyle, le chlorure de triéthylsilyle, le chlorure de triméthylsilyle, le di-chlorodiméthylsilane, l'hexaméthyldisiloxane, et 1'hexaméthy1disilazane.

13. Utilisation selon l'une quelconque des revendications 1, 11 et 12, procédé selon l'une quelconque des revendications 2 à 5, 11 et 12, ou mousse inorganique selon l'une quelconque des revendications 6 à 9, 11 et 12, ou composition selon l'une quelconque des revendications 10, 11 et 12, les particules inorganiques silanisées étant des particules de SiO₂ ou Al₂O₃ silanisées.

14. Utilisation selon l'une quelconque des revendications 1, 11, 12 et 13, procédé selon l'une quelconque des revendications 2 à 5, 11, 12 et 13, mousse inorganique selon l'une quelconque des revendications 6 à 9, 11, 12 et 13, ou composition selon l'une quelconque des revendications 10, 11, 12 et 13, les particules inorganiques silanisées pouvant être obtenues par mise en réaction de particules inorganiques avec un agent de silanisation approprié en une quantité allant de 1 à 20 % en moles, préférablement de 3 à 17 % en moles, sur la base de la quantité molaire totale des particules inorganiques.

15. Utilisation selon l'une quelconque des revendications 1, 11, 12, 13 et 14, procédé selon l'une quelconque des revendications 2 à 5, 11, 12, 13 et 14, mousse inorganique selon l'une quelconque des revendications 6 à 9, 11, 12, 13 et 14, composition selon l'une quelconque des revendications 10, 11, 12, 13 et 14, l'au moins un liant inorganique étant
(a) choisi parmi des ciments, préférablement parmi des ciments CEM I, CEM II, CEM III, CEM IV, CEM V, selon la norme DIN EN 197-1 (11/2011), des ciments d'aluminate de calcium, des ciments de sulfoaluminate de calcium, et des mélanges correspondants ; ou
(b) choisi parmi le gypse, l'hémihydrate de sulfate de calcium, l'anhydrite, et des mélanges correspondants ;
(c) choisi parmi des liants hydrauliques latents, des liants pouzzolaniques, et des mélanges correspondants, les liants hydrauliques latents, les liants pouzzolaniques, et les mélanges correspondants étant fournis en combinaison avec un activateur alcalin, qui est préférablement choisi dans le groupe constitué par des hydroxydes de métal alcalin, des hydroxydes de métal alcalino-terreux, des carbonates de métal alcalin, des carbonates de métal alcalino-terreux, des aluminates de métal alcalin, des aluminates de métal alcalino-terreux, des silicates de métal alcalin, des silicates de métal alcalino-terreux, et des mélanges correspondants ; ou
(d) un mélange de liants inorganiques choisis parmi les options (a) et (b), ou un mélange de liants inorganiques choisis parmi les options (a) et (c), ou un mélange de liants inorganiques choisis parmi les options (b) et (c), ou un mélange de liants inorganiques choisis parmi les options (a), (b) et (c).

16. Utilisation selon l'une quelconque des revendications 1, 11, 12, 13, 14 et 15, procédé selon l'une quelconque des revendications 2 à 5, 11, 12, 13, 14 et 15, mousse inorganique selon l'une quelconque des revendications 6 à 9, 11, 12, 13, 14 et 15, composition selon l'une quelconque des revendications 10, 11, 12, 13, 14 et 15, la mousse inorganique possédant une teneur en phase gazeuse allant de 70 à 97 %, et/ou la mousse inorganique possédant une densité inférieure à 350 g/L.
